# EUROPÄISCHE PATENTSCHRIFT

(11) **EP 4 146 504 B1**
(45) Veröffentlichungstag und Bekanntmachung des Hinweises auf die Patenterteilung: **03.09.2025**
(21) Anmeldenummer: 22717200.4
(22) Anmeldetag: 31.03.2022
(51) Int. Cl.: B60P 3/24

(54) **BEHÄLTER MIT VARIABLER FÜLLRAUMAUFTEILUNG ZUR AUFNAHME DIVERSER MEDIEN**
CONTAINER HAVING A VARIABLE FILLING-SPACE DIVISION FOR RECEIVING VARIOUS MEDIA
RÉCIPIENT À DIVISION VARIABLE DE L'ESPACE DE REMPLISSAGE DESTINÉ À RECEVOIR DIFFÉRENTS MILIEUX

(30) Priorität: 01.04.2021 DE 102021108440
(43) Veröffentlichungstag der Anmeldung: 15.03.2023
(73) Patentinhaber: Elkamet Kunststofftechnik GmbH, 35216 Biedenkopf (DE)
(72) Erfinder: RÜHL, Jürgen, 61203 Reichelsheim (DE); EMRICH, Marco, 35327 Ulrichstein (DE); NEEBE, Martin, 35260 Stadtallendorf (DE); SCHORGE, Sebastian, 35102 Lohra (DE)
(74) Vertreter: Keil & Schaafhausen Patentanwälte PartGmbB
(86) Internationale Anmeldenummer: PCT/EP2022/058618
(87) Internationale Veröffentlichungsnummer: WO 2022/207815

(56) Entgegenhaltungen:
- EP-A1- 0 303 417
- CN-A- 110 353 547
- CN-U- 205 275 339
- GB-A- 1 379 843
- GB-A- 2 148 995
- TW-B- I 650 113
- US-A- 2 758 747
- US-B2- 7 390 052

## Beschreibung

### Hintergrund der Erfindung

Die Erfindung betrifft einen Behälter zur Aufnahme wenigstens eines Mediums, vorzugsweise eines Fluids. Dazu umfasst der Behälter eine Behälterwandung, die einen ersten Aufnahmeraum mit einem ersten Aufnahmevolumen definiert, und eine erste Vorrichtung, die innerhalb des ersten Aufnahmeraums angeordnet ist und ein zweites Aufnahmevolumen definiert. Ferner weist der Behälter wenigstens eine Öffnung auf, die dazu eingerichtet ist, ein Medium den Aufnahmevolumina zuzuführen oder von diesen abzuführen.

Zum Transport, zur Lagerung und zur Beherrschung verschiedener Medien werden Behälter verwendet, so zum Beispiel für die Wasserversorgung in Wohnwagen, Wohnmobilen, Booten, für Reinigungsmaschinen, in physischen, chemischen oder biologischen Prozessen oder für den Transport von Kraftstoffen und Betriebsstoffen.

Zur Befüllung und Entnahme des Mediums weisen Behälter wenigstens eine Öffnung auf. Häufig weisen Behälter jedoch auch mehrere Öffnungen auf, wobei die Öffnungen entweder ausschließlich für die Zufuhr oder ausschließlich für die Abfuhr eines Mediums verwendet werden. In der Regel ist der Behälter dabei formstabil, sodass sich die Behälterwandung in Abhängigkeit von der Befüllungsmenge, d.h. in Abhängigkeit des Füllvolumens, nicht oder zumindest nicht merklich verformt. Der Stauraum, den ein solcher Behälter einnimmt, ist somit unabhängig von seiner Befüllungsmenge gleichbleibend.

Wenn ein Anwender, beispielsweise ein Anwender einer Reinigungsmaschine, mehrere Medien benötigt, beispielsweise ein Reinigungsmittel und Wasser, und eine Vermischung der Medien während des Transports oder der Lagerung unerwünscht ist, benötigt der Anwender mehrere getrennte Behälter. Ein Nachteil bei der Verwendung mehrerer getrennter Behälter entsteht insbesondere während der Handhabung, beispielsweise beim Transport, wobei die separate Handhabung eines jeden Behälters umständlich und aufwendig ist.

Mehrere getrennte Behälter werden auch benötigt, wenn für eine Anlage oder einen Kreislaufprozess ein Medium aus einem ersten Behälter, beispielsweise Frischwasser in einem Wohnmobil, entnommen wird und anschließend, nach der Nutzung, beispielsweise nach dem Spülen, Duschen oder Reinigen, verunreinigt ist und, beispielsweise als Grauwasser, in einen zweiten Behälter aufgenommen wird. Zu Beginn eines solchen Prozesses ist der erste Behälter vollständig mit Frischwasser gefüllt und der zweite Behälter ist leer. Am Ende des Prozesses ist der erste Behälter entleert und das Frischwasser verbraucht, wobei der zweite Behälter mit Grauwasser gefüllt ist.

Die gleiche Problematik tritt auf, wenn eine Reinigungsmaschine zur Abgabe von sauberem Wasser und zur anschließenden Aufnahme des verunreinigten Wassers je einen Behälter aufweist, oder wenn ein erster Behälter als Depot für ein Mahlgut dient und dieses nach der Verarbeitung in einen zweiten Behälter gefüllt wird. Hierbei ist unschwer erkennbar, dass nur 50% des zur Verfügung stehenden Gesamtvolumens der beiden Behälter verwendet werden, wobei die übrigen 50% des Gesamtvolumens ungenutzt sind. Folglich sind in derartigen Anwendungsfällen durchgehend 50% des Stauraums unbefüllt bzw. ungenutzt und dennoch beansprucht, indem auch der unbefüllte Behälter Stauraum einnimmt.

Auch in anderen Anwendungsfällen werden häufig unflexible, starre Behälteranordnungen verwendet, die einen Großteil des für den Behälter benötigten Stauvolumens ungenutzt lassen. Demnach weisen beispielsweise Diesel-Kraftfahrzeuge oftmals zwei Behälter auf, wobei ein Behälter für die Befüllung mit Kraftstoff vorgesehen ist und ein weiterer Behälter mit einer Harnstofflösung zur Abgasnachbehandlung befüllt wird. In der Regel leert sich der Kraftstofftank während der Kraftfahrzeugnutzung deutlich schneller als der Behälter mit der Harnstofflösung, sodass bereits vor dem vollständigen Verbrauch der Harnstofflösung Kraftstoff nachgetankt werden muss. Der Kraftstofftank kann während des Tankvorgangs erneut vollständig befüllt werden. Da der Behälter mit der Harnstofflösung allerdings nicht zwingend nachbefüllt werden muss und eine Nachbefüllung von nur wenigen Litern aufwendig ist, bleibt das durch die bereits verbrauchte Harnstofflösung frei gewordene Volumen häufig ungenutzt.

Aus der EP 0 863 045 A1 ist daher ein Fluidbehälter mit einer Trennwand bekannt, wobei die Trennwand den Fluidbehälter in Teilbehälter unterteilt und eine variable Ausnutzung des Gesamtvolumens des Fluidbehälters gestattet, wobei sich die Trennwand in ihrer Position in Abhängigkeit von dem Füllvolumen flexibel verschiebt.

Ferner ist aus der EP 0 709 055 A1 ein Behälter mit zwei Aufnahmevolumina bekannt, wobei ein zweites Aufnahmevolumen das nach dem Verbrauch verunreinigte Wasser eines ersten, zu Beginn mit sauberem Wasser befüllten Aufnahmevolumens aufnimmt, und wobei sich im Gebrauch das zweite Aufnahmevolumen allmählich vergrößert, während sich das erste Aufnahmevolumen verkleinert.

US 2 758 747 A offenbart einen Tank mit zwei Einlässen und zwei Auslässen. Innerhalb des Tanks ist ein flexibler Beutel angeordnet, der wasserdicht an den Einlass und den Auslass angebunden ist. Über den Einlass kann Flüssigkeit in den Beutel eingelassen werden, so dass sich der Beutel innerhalb des Tanks ausdehnt und diesen zumindest teilweise auskleidet. Ferner kann ein zweiter Beutel innerhalb des Tanks angeordnet sein, wobei beide Beutel jeweils über einen eigenen Einlass verfügen.

EP 0 303 417 A1 offenbart einen Tank mit drei Einlässen und drei Auslässen. Das Innere des Tanks ist durch zwei unabhängige flexible Wandungen in drei Kompartimente unterteilt. Die Kompartimente sind nebeneinander angeordnete Kammern, die jeweils über einen eigenen Einlass und einen eigenen Auslass verfügen. Das Innere des Tanks kann eine Beschichtung aufweisen.

Nachteilig an den bekannten Behältern erweist sich bislang, dass sich bei einem aufgrund der Befüllung stark ausbreitenden ersten Aufnahmevolumen, insbesondere in den Eckbereichen des Behälters, kleine Volumina bilden, wobei diese kleinen Volumina nur schwer für die Zu- und/oder Abfuhr der Medien zugänglich sind. Dies liegt insbesondere daran, dass die kleinen Volumina durch die Behälterwandung sowie durch die flexible Trennschicht, beispielsweise durch die Trennwand in EP 0 863 045 A1 oder durch die Beutelaußenwand in EP 0 709 055 A1, abgekapselt sind.

Ein weiterer Nachteil der bekannten Behälter besteht darin, dass eine Beschädigung der Trennschicht zu einer direkten Verbindung zwischen den Aufnahmevolumina führt, sodass sich die Medien der Aufnahmevolumina durchmischen können. Eine derartige Durchmischung, beispielsweise von Frischwasser und Grauwasser, oder von reaktiven Medien kann schwerwiegende Folgen haben und ist daher zu vermeiden.

Ferner sind insbesondere bei Anwendungen mit erhöhten Hygieneanforderungen die bekannten Behälter ungeeignet, da eine zuverlässige Reinigung oder ein Austausch von Trennschichten nicht möglich ist.

### Zusammenfassung der Erfindung

Die Aufgabe der vorliegenden Erfindung besteht daher darin, Behälter sowie ein Verfahren zu Herstellung solcher Behälter bereitzustellen, die die obigen Nachteile vermeiden und gleichzeitig Wirtschaftlichkeitsanforderungen genügen.

Die Aufgabe wird gelöst durch einen Behälter nach Anspruch 1 sowie durch ein Verfahren zur Herstellung eines solchen Behälters nach Anspruch 13.

Vorteilhafte Ausgestaltungen der Erfindung ergeben sich aus den Unteransprüchen.

Ein Behälter gemäß Anspruch 1 der vorliegenden Erfindung weist wenigstens eine zweite Vorrichtung auf, wobei die wenigstens eine zweite Vorrichtung innerhalb des ersten Aufnahmeraums angeordnet ist und wenigstens ein drittes Aufnahmevolumen definiert. Ferner sind die erste Vorrichtung und die wenigstens eine zweite Vorrichtung wenigstens teilweise flexibel ausgebildet, sodass die Größe des zweiten Aufnahmevolumens und die Größe des wenigstens einen dritten Aufnahmevolumens variabel sind. Die flexible Ausbildung kann dabei durch die konstruktive Auslegung (beispielsweise mit faltenbalgartigem Aufbau) und/oder durch die Wahl des Materials (beispielsweise durch Vorsehen von Kunststofffolien und/oder Einsatz elastischer Kunststoffe) erfolgen. Zusätzlich weist der Behälter wenigstens zwei Öffnungen auf, die dazu eingerichtet sind, ein Medium dem ersten Aufnahmevolumen und/oder dem zweiten Aufnahmevolumen und/oder dem wenigstens einen dritten Aufnahmevolumen zuzuführen oder von diesen abzuführen.

Das erste Aufnahmevolumen wird nachfolgend als das durch die Behälterwandung definierte Gesamtvolumen des Behälters betrachtet. Das zweite Aufnahmevolumen, das innerhalb der Behälterwandung und damit innerhalb des ersten Aufnahmeraums angeordnet ist, reduziert folglich das verfügbare erste Aufnahmevolumen um den Betrag des zweiten Aufnahmevolumens, wobei sich das verfügbare erste Aufnahmevolumen aus der Differenz des Gesamtvolumens des Behälters und des zweiten Aufnahmevolumens bildet. Vorzugsweise ist die Behälterwandung des Behälters formstabil ausgeführt, sodass das Gesamtvolumen des Behälters unabhängig von den Füllmengen des ersten und des zweiten Aufnahmevolumens gleichbleibend oder zumindest nahezu gleichbleibend ist, wohingegen sich das verfügbare erste Aufnahmevolumen in Abhängigkeit des zweiten Aufnahmevolumens reduziert.

Es wird darauf hingewiesen, dass bei der Definition der Aufnahmevolumina die erste und die zweite Vorrichtung, die innerhalb des Gesamtvolumens des ersten Aufnahmeraums angeordnet sind, volumentechnisch nicht berücksichtigt werden. Dies erscheint zweckdienlich, da die erste Vorrichtung und die zweite Vorrichtung aufgrund ihrer relativ dünnen Wandungen vorzugsweise nur einen sehr kleinen prozentualen Volumenanteil des Gesamtvolumens des Behälters vereinnahmen.

Mit Hilfe der wenigstens zwei Öffnungen des Behälters kann das erste Aufnahmevolumen und/oder das zweite Aufnahmevolumen und/oder das dritte Aufnahmevolumen mit einem Medium befüllt und/oder entleert werden, wobei den Aufnahmevolumina das entsprechende Medium über die Öffnung zu- und/oder von diesen abgeführt wird. Dabei können die Aufnahmevolumina entweder direkt an die Öffnungen angeschlossen sein oder aber über zusätzliche Bauteilkomponenten, beispielsweise Schläuche, mit den Öffnungen in medialer Verbindung stehen. Als Medien, die in den Aufnahmevolumina aufgenommen werden können, kommen sämtliche transportfähigen Medien in Betracht, so zum Beispiel Fluide (Gase, Flüssigkeiten) oder Feststoffe, beispielsweise in Granulat- oder Pulverform. Dabei können die verschiedenen Aufnahmevolumina mit identischen Medien oder unterschiedlichen Medien befüllt sein. Genauso kann es vorteilhaft sein, wenn zunächst nur ein Aufnahmevolumen mit einem Medium befüllt ist und die übrigen Aufnahmevolumina vollständig entleert sind.

Erfindungsgemäß ist die wenigstens eine zweite Vorrichtung innerhalb des zweiten Aufnahmevolumens angeordnet. Damit lassen sich Varianten wie "Beutel in Beutel in Tank", "Beutel in Schlauch in Tank", "Schlauch in Schlauch in Tank" oder ""Beutel/Schlauch neben Trennwand in Tank" realisieren.

Das Gesamtvolumen des Behälters bleibt von der Bildung des dritten Aufnahmevolumens unberührt. Wenn die zweite Vorrichtung (und damit das dritte Aufnahmevolumen) innerhalb des zweiten Aufnahmevolumens angeordnet ist, steht vorzugsweise entweder nur das dritte oder nur das zweite Aufnahmevolumen mit einer Öffnung in medialer Verbindung, d. h., dass ein Medium über die Öffnung entweder nur dem dritten oder nur dem zweiten Aufnahmevolumen zu- und/oder von diesem abgeführt werden kann. Dementsprechend wird vorzugsweise die zweite Vorrichtung (und damit das dritte Aufnahmevolumen), wenn sie innerhalb des zweiten Aufnahmevolumens der ersten Vorrichtung angeordnet ist, von der ersten Vorrichtung umschlossen. Hierdurch kann bei einer Beschädigung der zweiten Vorrichtung die erste Vorrichtung weiterhin das hierin eingeschlossene zweite Aufnahmevolumen von dem ersten Aufnahmevolumen abgrenzen. Wenn alternativ die zweite Vorrichtung (und damit das dritte Aufnahmevolumen) innerhalb des ersten Aufnahmevolumens angeordnet ist, ist vorzugsweise nur das dritte Aufnahmevolumen mit einer Öffnung verbunden. Bei einer Beschädigung der zweiten Vorrichtung dient dann das erste Aufnahmevolumen zur Aufnahme des Mediums aus dem dritten Aufnahmevolumen, wobei die erste Vorrichtung das verfügbare erste Aufnahmevolumen weiterhin von dem zweiten Aufnahmevolumen abtrennt.

Des Weiteren kann es bevorzugt sein, wenn das zwischen der ersten und der zweiten Vorrichtung gebildete Aufnahmevolumen ebenfalls mit einem Medium befüllt ist. Wenn beispielsweise das dritte Aufnahmevolumen innerhalb des zweiten Aufnahmevolumens angeordnet ist, kann hierdurch, wenn die zweite Vorrichtung beschädigt ist, ein in dem dritten Aufnahmevolumen befindliches Medium durch das Medium des zweiten Aufnahmevolumens neutralisiert werden, bevor die Gefahr besteht, dass auch die erste Vorrichtung beschädigt wird. Wenn die zweite Vorrichtung dagegen innerhalb des ersten Aufnahmeraums angeordnet ist, bildet sich das Gesamtvolumen aus dem zweiten Aufnahmevolumen, dem dritten Aufnahmevolumen und dem verfügbaren ersten Aufnahmevolumen. Das verfügbare erste Aufnahmevolumen bildet sich dabei aus der Differenz des Gesamtvolumens des Behälters und des zweiten und dritten Aufnahmevolumens.

Die Anordnung einer Vorrichtung innerhalb des Behälters, die zu der Bildung eines (weiteren) Aufnahmevolumens innerhalb eines anderen Aufnahmevolumens führt, erfordert nicht, dass das derart gebildete (weitere) Aufnahmevolumen eigenständig und durch die Wandung der Vorrichtung vollumschlossen ist. Vielmehr kann das Aufnahmevolumen auch abhängig von der Behälterwandung des Behälters sein, sodass das (weitere) Aufnahmevolumen durch die Vorrichtung zusammen mit der Behälterwandung gebildet oder begrenzt wird. Beispielsweise kann eine Vorrichtung auch nur einen Teil eines Aufnahmevolumens abtrennen bzw. abgrenzen, so dass das innerhalb eines Aufnahmevolumens angeordnete (weitere) Aufnahmevolumen so verstanden werden muss, dass eine Entfernung der Vorrichtung aus dem Behälter die zuvor durch die Vorrichtung voneinander getrennten Aufnahmevolumina, d.h. das eine Aufnahmevolumen und das innerhalb dieses Aufnahmevolumens angeordnete (weitere) Aufnahmevolumen, verbindet.

Vorzugsweise weist der Behälter wenigstens drei Öffnungen auf, wobei je wenigstens eine Öffnung wenigstens einem Aufnahmevolumen zugeordnet ist. Es ist offensichtlich, dass insbesondere zwei Öffnungen pro Aufnahmevolumen vorteilhaft sein können, wobei je eine Öffnung für die Zufuhr und je eine Öffnung für die Abfuhr eines Mediums vorgesehen ist. Bei einer Ausführungsform mit drei Aufnahmevolumina und je einer Öffnung pro Aufnahmevolumen könnte beispielsweise ein Aufnahmevolumen mit einem Reinigungsmittel und ein anderes Aufnahmevolumen mit Frischwasser befüllt sein, wobei das Reinigungsmittel und das Frischwasser während eines Reinigungsprozesses in einer Reinigungsmaschine vermischt werden. Das weitere Aufnahmevolumen könnte das verunreinigte Wasser aufnehmen. Folglich ist zu Beginn das Aufnahmevolumen zur Aufnahme des verunreinigten Wassers sehr klein, im Idealfall nicht vorhanden, und die anderen beiden Aufnahmevolumina maximal befüllt. Das Aufnahmevolumen für das verunreinigte Wasser befüllt sich folglich im Idealfall erst im Laufe des Reinigungsprozesses. Das Gesamtvolumen des Behälters, das die drei Aufnahmevolumina (verfügbares erstes Aufnahmevolumen, zweites Aufnahmevolumen und drittes Aufnahmevolumen) umfasst, ist dabei im Idealfall stets vollständig genutzt, d. h. befüllt.

Vorzugsweise ist die in dem Behälter angeordnete erste Vorrichtung und/oder die zweite Vorrichtung wenigstens teilweise flexibel ausgebildet. Hierdurch ist beispielsweise das zweite Aufnahmevolumen und/oder das dritte Aufnahmevolumen in Bezug auf das erste Aufnahmevolumen variabel. Wie schon zuvor erwähnt, wird das verfügbare erste Aufnahmevolumen als Differenz des Gesamtvolumens des Behälters und des zweiten und dritten Aufnahmevolumens gebildet. Das verfügbare erste Aufnahmevolumen wird demnach in Abhängigkeit der übrigen Aufnahmevolumina definiert, wobei die Anzahl der in den Behälter eingebrachten Vorrichtungen für die Anzahl der Aufnahmevolumina entscheidend ist. Beispielsweise können auch eine erste Vorrichtung und zwei zweite Vorrichtungen in den Behälter eingebracht werden, wodurch sich vier Aufnahmevolumina bilden. Bevorzugt sind die eingebrachten Vorrichtungen und damit die durch sie definierten Aufnahmevolumina variabel, sodass sie sich bei Befüllung vergrößern und bei Entnahme verkleinern können. Die Vorrichtungen könnten hierzu beispielsweise flexibel, elastisch und/oder verschiebbar ausgebildet sein.

Vorzugsweise weist der Behälter wenigstens eine Rinne auf, wobei die Rinne vorzugsweise in der Behälterwandung angeordnet ist, wobei die wenigstens eine Rinne das erste Aufnahmevolumen mit der wenigstens einen ersten Öffnung und/oder das zweite Aufnahmevolumen mit der wenigstens einen zweiten Öffnung verbindet. Dabei sind die Öffnungen dazu eingerichtet, ein Medium den Aufnahmevolumina, d.h. dem Aufnahmevolumen, mit dem die Öffnungen jeweils verbunden sind, zuzuführen und/oder von diesen abzuführen.

Bei einer starken Befüllung eines Aufnahmevolumens wird die entsprechende Vorrichtung bzw. die Wandung der Vorrichtung an die Behälterwandung gepresst. Hierbei entstehen insbesondere in den Eckbereichen abgekapselte Volumina, auf die nur schwierig zugegriffen werden kann, d. h. die nur schwierig entleert oder befüllt werden können. Eine Rinne in der Behälterwandung sorgt demnach dafür, dass diese Volumina mit wenigstens einer Öffnung verbunden werden. Hierdurch kann eine zuverlässige Verbindung zwischen den abgekapselten Volumina und der Öffnung gewährleistet werden. Als Rinne kann demnach jede Ausgestaltung eines medienführenden Kanals verstanden werden, der eine Verbindung des ersten Aufnahmevolumens zu wenigstens einer Öffnung gewährleistet, ohne dass eine der Vorrichtungen bzw. eine Wandung der Vorrichtung die Rinne blockieren kann. Vorzugsweise weist die Rinne dabei eine größere Erstreckung in Längsrichtung als in Querrichtung auf. Ferner kann eine Pumpe innerhalb der Rinne oder innerhalb des Aufnahmevolumens angeordnet sein, sodass die Zu- und/oder Abfuhr zusätzlich verbessert werden kann. Des Weiteren kann es vorteilhaft sein, wenn eine Rinne in einem jeden Aufnahmevolumen des Behälters angeordnet wird. Die Rinne kann hierbei die Zu- und/oder Abfuhr des Mediums in das und/ oder aus dem Aufnahmevolumen verbessern.

In einer bevorzugten Ausführungsform, in der der Behälter wenigstens eine dritte Öffnung und wenigstens eine zweite Vorrichtung aufweist, wobei die wenigstens eine zweite Vorrichtung wenigstens ein drittes Aufnahmevolumen definiert, und wobei die wenigstens eine Rinne das dritte Aufnahmevolumen mit wenigstens einer dritten Öffnung verbindet, wobei die wenigstens eine dritte Öffnung dazu eingerichtet ist, ein Medium dem dritten Aufnahmevolumen zu- und/oder von diesem abzuführen.

Es liegt auch im Rahmen der Erfindung, nur die zweite Vorrichtung, bspw. einen (Hygiene)-Innenbeutel, mit einer Öffnung zu verbinden, nicht aber den Außenbeutel, wie es bspw. bei einer Lösung "Beutel in Beutel in Tank mit Rinne" in Betracht kommt.

In einer weiteren bevorzugten Ausführungsform weist die Rinne zudem eine Ummantelung mit mehreren Rinnenöffnungen auf, wobei die Rinnenöffnungen dazu eingerichtet sind, die Rinne mit den Aufnahmevolumina zu verbinden. Vorzugsweise weisen die Rinnenöffnungen in die Rinne gerichtete Vorsprünge auf, wobei die Vorsprünge vorzugsweise in Strömungsrichtung des Mediums geneigt sind. Für den Fall, dass die Rinne in die Behälterwandung integriert ist, etwa in Form einer eingeformten Sicke, wird zumindest ein Teil der Ummantelung durch die Behälterwandung gebildet. Die Ummantelung weist bevorzugt Rinnenöffnungen auf, sodass ein Medium aus dem Aufnahmevolumen, in dem die Rinne angeordnet ist, und somit insbesondere auch aus den abgekapselten Volumina, in die Rinne eindringen kann. Wenn die Rinne zum Abführen eines Mediums verwendet wird, leitet die Rinne das Medium zu einer Öffnung in der Behälterwandung des Behälters, wobei die Rinnenöffnungen vorzugsweise in Strömungsrichtung des Mediums gerichtete Vorsprünge aufweisen. Alternativ oder ergänzend können die Rinnenöffnungen auch in Strömungsrichtung geneigt sein. Durch diese Vorkehrungen kann nach dem Eindringen des Mediums in die Rinne ein unerwünschtes Austreten des Mediums verhindert oder aber zumindest reduziert werden.

In einer bevorzugten Ausführungsform umfasst die erste Vorrichtung und/oder die zweite Vorrichtung eine Trennwand, einen Beutel oder einen Schlauch. Der Unterschied zwischen einem Beutel und einem Schlauch besteht insbesondere darin, dass der Schlauch zwei Öffnungen aufweist, sodass eine von der Zufuhr separierte Öffnung für die Abfuhr des Mediums bereitgestellt werden kann. Ausgehend davon, dass der Behälter eine erste Vorrichtung und lediglich eine zweite Vorrichtung umfasst, bestehen erfindungsgemäß folgende Gestaltungsvarianten der Aufnahmevolumina des Behälters: ein erster Beutel in einem zweiten Beutel in dem Gesamtvolumen des Behälters; eine Trennwand in dem Gesamtvolumen des Behälters und ein Beutel in einem der dadurch entstehenden Aufnahmevolumina; ein erster Beutel und ein zweiter Beutel in dem Gesamtvolumen des Behälters, wobei die Beutel nebeneinander und nicht ineinander angeordnet sind; zwei Trennwände in dem Gesamtvolumen des Behälters; ein erster Schlauch in einem zweiten Schlauch in dem Gesamtvolumen des Behälters; ein erster Schlauch und ein zweiter Schlauch in dem Gesamtvolumen des Behälters, wobei die Schläuche nebeneinander und nicht ineinander angeordnet sind; eine Trennwand in dem Gesamtvolumen des Behälters und ein Schlauch in einem der dadurch entstehenden Aufnahmevolumina; ein Beutel und ein Schlauch in dem Gesamtvolumen des Behälters; und ein Beutel in einem Schlauch in dem Gesamtvolumen des Behälters. Wenn die erste Vorrichtung einen Beutel oder einen Schlauch umfasst, wird innerhalb des Beutels oder des Schlauchs das zweite Aufnahmevolumen gebildet. Entsprechendes gilt für die zweite Vorrichtung und das dritte Aufnahmevolumen. Das verfügbare erste Aufnahmevolumen wird als Differenz des Gesamtvolumens des Behälters und des zweiten und dritten Aufnahmevolumens gebildet. Wenn die erste Vorrichtung eine Trennwand aufweist, wird das Gesamtvolumen hierdurch in zwei Aufnahmevolumina, ein verfügbares erstes und ein zweites Aufnahmevolumen, unterteilt. Das dritte Aufnahmevolumen wird dann durch die Einführung eines Beutels oder eines Schlauchs durch ebendiesen gebildet. Alternativ wird durch die Einführung einer weiteren Trennwand das verfügbare erste oder das zweite Aufnahmevolumen weiter geteilt, sodass ein drittes Aufnahmevolumen entsteht. Wie bereits zuvor erwähnt, können auch mehr als zwei Vorrichtungen in den Behälter eingebracht werden. Folglich können auch mehr als drei Aufnahmevolumina innerhalb des Behälters gebildet werden.

In einer weiteren bevorzugten Ausführungsform ist jedes Aufnahmevolumen gegenüber den übrigen Aufnahmevolumina hermetisch abgeschlossen. Die hermetische Abriegelung kann insbesondere durch eine entsprechende Materialwahl der Vorrichtungen bzw. der Behälterwandung sowie durch die Anbindung bzw. Befestigung der Vorrichtungen an dem Behälter gewährleistet werden. Alternativ könnte eine Vorrichtung auch in Form einer Membran ausgestaltet sein, sodass ein gezielter Stofftransport zwischen den Aufnahmevolumina und damit unter den Medien durchgeführt und durch die Membran beeinflusst werden kann.

Vorzugsweise sind die erste Vorrichtung und/oder die wenigstens eine zweite Vorrichtung lösbar mit dem Behälter verbunden, wobei die erste Vorrichtung und/oder die wenigstens eine zweite Vorrichtung unabhängig voneinander und zerstörungsfrei aus dem Behälter entnommen werden können. Eine lösbare Verbindung kann dabei durch entsprechende Befestigungselemente, beispielsweise Überwurfmuttern, Gewinderinge, Schrauben, Anschlussplatten etc., ermöglicht werden. Die Anschlussplatten können Durchgangsöffnungen aufweisen, durch welche ein Medium dem zugeordneten Aufnahmevolumen zugeleitet oder von diesem abgeleitet werden kann, wobei die Durchgangsöffnungen Anschlussmöglichkeiten für Rohrstutzen, Einfüllstutzen, Schlauchtüllen und dergleichen bieten oder durch solche Elemente gebildet sind.

Wenn eine Vorrichtung durch einen Beutel oder einen Schlauch gegeben ist, kann die Öffnung der Vorrichtung mit Hilfe von Befestigungselementen an einer Öffnung des Behälters befestigt werden. Wenn der Behälter beispielsweise eine Öffnung mit einer Anlagefläche sowie einem Innengewinde aufweist, kann ein Gewindering in die Öffnung des Behälters eingeschraubt werden und die Vorrichtung bzw. den Vorrichtungsanschlussflansch der Vorrichtungsöffnung bzw. des Vorrichtungsanschlussstutzens, über den die Zu- und/oder Abfuhr eines Mediums in die Vorrichtung ermöglicht wird, an der Anlagefläche der Behälteröffnung verklemmen. Der Gewindering kann zur Montage beispielsweise einen Innensechskant aufweisen und ein Außengewinde aufweisen. Hierdurch kann der Gewindering in der Öffnung des Behälters verschraubt werden. Wenn in die zuvor beschriebene Vorrichtung ein weiterer Beutel oder ein weiterer Schlauch eingeführt wird, kann auch dieser über einen weiteren Gewindering oder eine Überwurfmutter oder eine andere Kombination von Befestigungselementen in der Öffnung befestigt werden. Hierbei wird die Vorrichtung bzw. der Vorrichtungsanschlussflansch der Vorrichtungsöffnung bzw. des Vorrichtungsanschlussstutzens zwischen dem bereits verschraubten Gewindering und beispielsweise dem weiteren Gewindering verklemmt. Durch die Befestigung der Vorrichtungen mit Hilfe von lösbaren Befestigungselementen wird eine beliebige Entnahme und/oder ein beliebiges Einführen von Vorrichtungen in den Behälter ermöglicht, wobei die lösbaren Befestigungselemente entsprechend gelöst oder befestigt werden. Die Entnahme einer Vorrichtung verschafft einem Anwender des Behälters dabei einen einfacheren Zugang zu der Vorrichtung und damit eine verbesserte Reinigung oder Inspektion der entnommenen Vorrichtung. Zusätzlich kann die entnommene Vorrichtung beliebig ausgetauscht oder repariert werden. Hierdurch wird einer ungewünschten Durchmischung der Medien aufgrund einer Beschädigung der Vorrichtung, Verunreinigungen innerhalb der Vorrichtungen etc. zumindest vorgebeugt. Vorzugsweise erfolgt die Entnahme der Vorrichtung dabei ohne die Zerlegung der Behälterwandung und ausschließlich durch das Lösen der Befestigungselemente.

Ferner ist es bevorzugt, wenn alternativ oder ergänzend die erste Vorrichtung und/oder die wenigstens eine zweite Vorrichtung mit der Behälterwandung verschweißt und/oder verklemmt ist. Ein Verklemmen mit der Behälterwandung kann dadurch hergestellt werden, dass der Behälter mehrere Wandungskomponenten, beispielsweise zwei Behälterhälften, aufweist und die erste Vorrichtung und/oder die wenigstens eine zweite Vorrichtung zwischen den Wandungskomponenten verklemmt wird. Alternativ oder ergänzend können die Öffnungen des Behälters, wie bereits zuvor beschrieben, so ausgestaltet sein, dass über entsprechende Befestigungselemente, beispielsweise Gewinderinge, Anschlussstutzen, Anschlussplatten, Schrauben, Überwurfmuttern etc., die Vorrichtungen an den Öffnungen verklemmt werden. Darüber hinaus kann es auch bevorzugt sein, dass die Vorrichtungen bzw. der Vorrichtungsanschlussflansch der Vorrichtungsöffnung und/oder der Vorrichtungsanschlussstutzen mit der Behälterwandung und/oder den in der Behälterwandung angeordneten Öffnungen verschweißt sind. Vorteilhaft an einer lösbaren Befestigung einer Vorrichtung an der Öffnung des Behälters oder zwischen den Behälterwandungskomponenten ist insbesondere, dass die entsprechend befestigte Vorrichtung nach dem Lösen der Befestigungselemente zerstörungsfrei entnommen werden kann. Demgegenüber können für die Verklemmung benötigte Bauteile bei einer Verschweißung entfallen. Zudem kann durch das Verschweißen der Vorrichtung bzw. des Vorrichtungsanschlussflanschs der Vorrichtungsöffnung und/oder des Vorrichtungsanschlussstutzens mit der Behälterwandung und/oder den in der Behälterwandung angeordneten Öffnungen einfacher eine ausreichende Dichtheit hergestellt werden. Darüber hinaus kann eine Verschweißung vorteilhaft sein, wenn eine Entnahme der Vorrichtungen gerade verhindert werden soll.

Bei einer bevorzugten Ausführungsform weisen die erste Vorrichtung und/oder die wenigstens eine zweite Vorrichtung zumindest teilweise ein flexibles und insbesondere elastisch verformbares Material auf. Als flexible Materialien kommen Kunststofffolien in Betracht, beispielsweise Polyethylen-, Polypropylen- oder Polyesterfolien, die zur Erhöhung der mechanischen Festigkeit vorzugsweise monooder insbesondere biaxial gereckt sein können (BO-PE, BO-PP, BO-PET). Als elastisch verformbare Materialien kommen beispielsweise Silikon (SI), Polyurethan (PUR), Polyvinylchlorid (PVC), thermoplastische Elastomere (TPE) oder Gummi (NBR) in Betracht. Wenn die Vorrichtung in Form eines Beutels bereitgestellt wird, kann hierbei bevorzugt die Grund- oder die Mantelfläche der Wandung der Vorrichtung bzw. die Fläche, in die eine geringere Ausdehnung erfolgt, geringer ausgelegt werden, d.h. eine geringe Materialstärke aufweisen. Durch die Verwendung eines elastisch verformbaren Materials dehnt sich folglich die Vorrichtung bei der Befüllung aus und zieht sich bei der Entleerung zusammen. Bevorzugt wird hierbei eine maximale Verformung des elastischen Materials von 20% erreicht.

Die erste Vorrichtung und/oder die wenigstens eine zweite Vorrichtung können einen mehrschichtigen Aufbau haben, um die Eigenschaften des flexiblen Trennmittels an die jeweilige Anwendung anzupassen. Dies betrifft beispielsweise die mechanische Festigkeit, antibakterielle, neutralisierende, gegenüber bestimmten Materialien, wie Laugen oder Lösungsmitteln, inerte Eigenschaften usw..

Es liegt auch im Rahmen der Erfindung, dass die Behälterinnenwandung, die erste Vorrichtung und/oder die wenigstens eine zweite Vorrichtung zumindest teilweise aus einem antibakteriellen und/oder antiviralen Kunststoff bestehen oder mit einer antibakteriell und/oder antiviral wirkenden Beschichtung versehen sind. Hierzu können beispielsweise Additive auf Basis hochverzweigter Polymere, die mit nanoskaligen Metallen versehen sind, in eine Kunststoffmatrix, beispielsweise wie bei Polyamid, eingearbeitet werden.

Ferner kann es bevorzugt sein, wenn die erste Vorrichtung und/oder die wenigstens eine zweite Vorrichtung einen Faltenbalg aufweisen. Die Verwendung eines Faltenbalgs gewährleistet dauerhaft, d.h. auch nach einer Vielzahl an Befüllungsund Entleerungszyklen, eine Rückverformung. Insbesondere wenn die Vorrichtung in Form eines Beutels bereitgestellt wird, kann der Faltenbalg horizontal und/oder vertikal integriert sein bzw. sich entweder überwiegend in horizontale oder in vertikale Richtung ausdehnen.

Bei einer bevorzugten Ausführungsform weist die erste Vorrichtung und/oder die wenigstens eine zweite Vorrichtung ein Orientierungselement auf, wobei das Orientierungselement die Positionierung und/oder die Ausdehnungsrichtung der ersten Vorrichtung und/oder der wenigstens einen zweiten Vorrichtung vorbestimmt. Das Orientierungselement ist dabei bevorzugt innerhalb der Vorrichtung angeordnet. Beispielsweise könnte ein im Querschnitt quadratisches Gesamtvolumen der Behälterwandung eine Vorrichtung mit einem hieran angepassten quadratischen Orientierungselement aufweisen. Wird das Orientierungselement dann parallel zum Querschnitt des Behälters innerhalb des Behälters angeordnet, kann hierdurch eine Verdrehung der Vorrichtung innerhalb des Gesamtvolumens des Behälters verhindert werden. Somit kann mit Hilfe eines Orientierungselements eine gleichmäßige Ausbreitung der Vorrichtung innerhalb des Gesamtvolumens des Behälters ermöglicht werden. Alternativ kann die Vorrichtung einen Magneten oder dergleichen aufweisen, der die Vorrichtung innerhalb des Behälters positioniert bzw. orientiert. Als Orientierungselement wird demnach jedes Element verstanden, das mit der Vorrichtung interagiert und dafür sorgt, dass die Vorrichtung bezogen auf das Gesamtvolumen positioniert und/oder geführt wird. Durch eine vordefinierte Positionierung und eine vordefinierte Ausbreitung bzw. ein vordefiniertes Zusammenziehen der Vorrichtung bei der Befüllung oder der Entleerung wird insbesondere die Füllstandsmessung innerhalb des Aufnahmevolumens der Vorrichtung vereinfacht. Die Füllstandsmessung kann dabei insbesondere über Ultraschall erfolgen, wobei ein ultraschallreflektierendes Material in die Vorrichtung eingebracht wird.

In einer alternativen Ausführungsform weist der Behälter ein Ventil auf, wobei das Ventil dazu eingerichtet ist, den Zulauf in Abhängigkeit eines Füllpegels zu verschließen und/oder die Abfuhr eines Mediums zu verhindern und/oder einzuleiten und/oder eine Geruchsemission zu unterdrücken. Hierzu kann ein Schwimmerventil oder ein Begrenzungsventil vorgesehen sein, welches die Zuführung eines Mediums in eines der Aufnahmevolumina in Abhängigkeit vom Füllstand begrenzt und/oder versperrt. Ein derartiges Ventil kann die Vorrichtung vor einer Beschädigung durch einen übermäßigen Druck bzw. durch eine übermäßige Befüllung schützen. Die Verwendung eines Ventils kann die Abfuhr des Mediums in Abhängigkeit eines Zustands, beispielsweise bei einem zu hohen Druck oder einer erreichten Temperatur einleiten, d. h. die Abfuhr des Mediums ausführen bzw. beginnen. Alternativ oder ergänzend kann auch ein Rückschlagventil vorgesehen sein, wodurch eine ungewollte Geruchsemission der Füllmedien verhindert oder minimiert werden kann. Zusätzlich wird durch ein derartiges Ventil gewährleistet, dass das in ein Aufnahmevolumen eingefüllte Füllmedium das Aufnahmevolumen nicht ungewollt wieder verlässt.

Ferner kann es bevorzugt sein, wenn der Behälter und/oder die erste Vorrichtung und/oder die wenigstens eine zweite Vorrichtung eine Temperaturregelungseinheit und/oder eine Isolierung und/oder eine Sensorik zur Identifizierung physikalischer Eigenschaften eines Mediums aufweisen. Die Sensorik, die insbesondere auch für die Füllstandsmessung verwendet werden kann, weist bevorzugt mehrere Sensoren bzw. mindestens einen Sensor pro Aufnahmevolumen auf. Die Füllstandsmessung kann beispielsweise über einen Sensor in Form eines Dehnungsmessstreifens erfolgen, wobei der Dehnungsmessstreifen auf die Vorrichtung aufgebracht wird. Alternativ oder ergänzend kann eine Füllstandsmessung der Aufnahmevolumina und/oder des Behälters über Durchflussmesser in den Zuund/oder Abläufen, insbesondere in den Behälteröffnungen, und/oder über eine Gewichtsmessung des Behälters erfolgen.

Wenn beispielsweise eine zweite Vorrichtung in dem zweiten Aufnahmevolumen angeordnet ist, etwa im Fall einer Anordnung "(Innen-)Beutel in (Außen-)Beutel in Behälter", und das dritte Aufnahmevolumen mit einer Öffnung verbunden und zur Aufnahme eines Mediums vorgesehen ist, wobei das zweite Aufnahmevolumen nicht zur Aufnahme eines Mediums vorgesehen ist, können die erste Vorrichtung (der Außenbeutel) und die zweite Vorrichtung (der Innenbeutel) jeweils so ausgelegt werden, dass sie die Anforderungen arbeitsteilig erfüllen. So kann die erste Vorrichtung beispielsweise im Hinblick auf die Verträglichkeit mit einem in dem ersten Aufnahmevolumen aufzunehmenden Medium optimiert werden, während die zweite Vorrichtung unabhängig davon im Hinblick auf die Verträglichkeit mit einem in dem dritten Aufnahmevolumen aufzunehmenden Medium optimiert werden kann. Ebenso kann die erste Vorrichtung hinsichtlich Material und konstruktiver Auslegung beispielsweise insbesondere zur Erfüllung der mechanischen Anforderungen ausgelegt sein und die notwendige Robustheit und Stabilität mitbringen, während die zweite Vorrichtung insbesondere im Hinblick auf weitere Eigenschaften optimiert sein kann, beispielsweise Permeationseigenschaften, leichte Austauschbarkeit, niedrige Kosten, Recyclingfähigkeit, etc. Die zweite Vorrichtung kann auch im Hinblick auf hygienische Anforderungen, Eignung für Lebensmittelkontakt, antibakterielle und/oder antivirale Eigenschaften und dergleichen eingesetzt und/oder optimiert sein. Insbesondere in diesen Fällen bietet eine solche Anordnung auch den Vorteil, dass eine zweite Vorrichtung (etwa ein Innenbeutel), welche nach einer Gebrauchsdauer die Anforderungen nicht mehr erfüllt, sehr einfach aus der ersten Vorrichtung (etwa einem Außenbeutel) entfernt und durch eine neue zweite Vorrichtung ersetzt werden kann, die die geforderten Gebrauchseigenschaften aufweist.

So kann beispielsweise ein Wassertank, etwa für ein Wohnmobil oder ein Boot, einen Behälter mit einem ersten Aufnahmevolumen für Grauwasser aufweisen. In dem Behälter ist ein robuster Außenbeutel (erste Vorrichtung) vorgesehen, in welchem ein Innenbeutel zur Aufnahme von Trinkwasser angeordnet ist (zweite Vorrichtung). Das Trinkwasser kommt nur mit dem Innenbeutel in Kontakt, der bei Bedarf leicht ausgetauscht werden kann. Eine derartige Anordnung ("Beutel in Beutel in Tank") ermöglicht somit die dauerhafte und zuverlässige Erfüllung höchster Hygieneanforderungen und erübrigt eine regelmäßige und aufwändige Reinigung des Tanks unter Verwendung von Reinigungs- oder Desinfektionsmitteln.

Des Weiteren umfasst die vorliegende Erfindung gemäß Anspruch 13 ein Verfahren zur Herstellung eines Behälters entsprechend der vorangegangenen Beschreibung. Das Verfahren umfasst dabei bevorzugt die folgenden Schritte:
- Bereitstellung eines Behälters aus einem ersten Kunststoffmaterial und
- Rotationsformen einer ersten Vorrichtung (10) und/oder wenigstens einer zweiten Vorrichtung (20) aus einem zweiten Kunststoffmaterial unter Verwendung eines zweiten Kunststoffmaterials oder eines zweiten Kunststoffvorläufers, wobei die erste Vorrichtung (10) und/oder die wenigstens eine zweite Vorrichtung (20) in einer Behälterwandung (2) des bereitgestellten Behälters (1) geformt werden.

Vorzugsweise wird die Behälterwandung in einem Werkzeug unter Verwendung eines ersten Kunststoffmaterials oder eines ersten Kunststoffvorläufers gefertigt.

In Weiterbildung des Erfindungsgedankens wird die Behälterwandung durch Rotationsformen, Blasformen, Spritzgießen oder Tiefziehen gefertigt.

Durch das Herstellungsverfahren kann eine hohe Passformgenauigkeit der Vorrichtungen bezogen auf den Behälter gewährleistet werden.

Das jeweilige Ausgangsmaterial kann ein Kunststoffmaterial umfassen, welches in Form von Partikeln, beispielsweise als Pulver, Pellets, Granulat oder dergleichen oder als Plastisol in das Werkzeug eingebracht wird. In diesem Fall kann während des Rotationsformens bevorzugt Wärme in das Werkzeug eingebracht werden.

Kunststoffe im Sinne der vorliegenden Erfindung sind ganz allgemein sinterbare oder thermoplastisch verarbeitbare Polymere. Mit umfasst sind auch solche Materialtypen, die in dem Werkzeug durch einem (zunächst thermoplastischen) Ausgangsmaterial zugesetzte Vernetzungsmittel chemisch vernetzt werden und dadurch eine Behälterwandung aus duroplastischem Material ausbilden, beispielsweise aus vernetztem Polyethylen (XPE) im Fall der Verarbeitung von durch entsprechende Additive vernetzbarem Polyethylen (PE).

Das jeweilige Ausgangsmaterial kann alternativ einen Kunststoffvorläufer umfassen, welcher beispielsweise als Flüssigkeit mit geringer Viskosität in das Rotationswerkzeug eingebracht werden kann. Je nach Kunststoffvorläufer, Rezeptur und Temperatur liegt die Anfangsviskosität bevorzugt im Bereich von 4 mPa·s bis 5000 mPa·s. In diesem Fall ist vorgesehen, dass der Kunststoffvorläufer vor dem Rotationsformen als flüssige Schmelze in das Werkzeug eingebracht wird. Er kann jedoch auch in fester Form (z.B. als Pulver, Pellets, Schuppen oder dergleichen) zugegeben und erst im Werkzeug aufgeschmolzen werden.

Kunststoffvorläufer im Sinne der vorliegenden Erfindung sind ganz allgemein Monomere, Oligomere, Präpolymere und dergleichen, einschließlich Mischungen von zwei oder mehr Stoffen dieser Kategorien. Die erfindungsgemäßen Kunststoffvorläufer liegen in dem Werkzeug als flüssige Schmelze vor und reagieren, gegebenenfalls unter dem Einfluss ebenfalls zugesetzter Katalysatoren, Aktivatoren oder sonstiger Zusätze, unter Bildung eines Kunststoffs. Bei der Reaktion kann es sich um radikalische, kationische oder anionische Polymerisation, Polyaddition, Polykondensation, Metathesepolymerisation oder dergleichen handeln. Bei dem erhaltenen Kunststoff kann es sich um Thermoplaste oder Duroplaste handeln.

Als erster Kunststoff kommen thermoplastische Kunststoffe in Frage, beispielsweise Polyethylen (PE), Polypropylen (PP), Polyamid 6 (PA6), Polyamid 11 (PA11), Polyamid 12 (PA12), Polycarbonat (PC) oder Polyvinylchlorid (PVC). Bei dem ersten Ausgangsmaterial handelt es sich dann jeweils um den entsprechenden Kunststoff in Pulverform oder Granulatform. Im Fall von PVC kann alternativ auch eine auch als Plastisol bezeichnete Dispersion von PVC-Pulver in einem oder mehreren flüssigen Weichmachern eingesetzt werden. Im Fall der zuvor genannten Polyamide kann als Ausgangsmaterial alternativ ein Kunststoffvorläufer in Form des entsprechenden Lactams eingesetzt werden, insbesondere Caprolactam (für PA6) und/oder Laurinlactam (für PA12).

Als erster Kunststoff kommen aber auch duroplastische Kunststoffe in Frage, sofern sie entweder thermoplastisch verarbeitbar oder aus geeigneten Kunststoffvorläufern herstellbar sind. Zu der erstgenannten Gruppe zählt beispielsweise vernetztes Polyethylen (XPE). Zu der zweiten Gruppe gehören beispielsweise vernetzte Polyurethane (PUR), auf die nachfolgend noch eingegangen wird.

Als erster Kunststoff für die Behälterwandung kommen weiterhin Polydicyclopentadien (DCPD) oder Polybutylenterephthalat (PBT) in Frage. Als monomere bzw. oligomere Kunststoffvorläufer werden in diesen Fällen bevorzugt Dicyclopentadien (DCPD; z.B. Telene^{®} der Fa. Rimtec Corp.) bzw. cyclisches Oligobutylenterephthalat (z.B. CBT^{®} der Fa. Cyclics) mit den entsprechenden Katalysatoren bzw. Zusätzen als Ausgangsmaterial eingesetzt. Ebenfalls in Frage kommen Polyurethane (PUR), zu deren Herstellung Mischungen aus Di- und/oder Polyisocyanaten und Di- und/oder Polyolen als Kunststoffvorläufer eingesetzt werden. Eine oder beide dieser Vorläuferkomponenten können auch Oligomere oder Präpolymere, d.h. Polymere mit relativ geringem Molekulargewicht sein.

Als zweiter Kunststoff kommen im Rahmen des erfindungsgemäßen Verfahrens insbesondere weiche und/oder flexible und vorzugsweise elastisch verformbare Materialien in Frage, beispielsweise Silikon, Polyurethan, Polyvinylchlorid oder thermoplastische Elastomere. Der zweite Kunststoff und das entsprechende zweite Ausgangsmaterial werden vorzugsweise so gewählt, dass die zum Rotationsformen des zweiten Ausgangsmaterials erforderliche Verarbeitungstemperatur unter der Schmelztemperatur oder der Zersetzungstemperatur des ersten Kunststoffs liegt. In dieser Hinsicht bieten Polyurethane und Silikone den Vorteil, dass sie bereits bei Raumtemperatur verarbeitbar sind. Zusätzlich ist zu beachten, dass der zweite Kunststoff, bei Bedarf unter Verwendung eines geeigneten Trennmittels, eine geringe Neigung zur Haftung an dem ersten Kunststoff zeigt, so dass nach der Herstellung einer Vorrichtung deren Ablösung von der Behälterwandung leicht möglich ist.

Alternativ können die Vorrichtungen auch in einem von dem Werkzeug zur Herstellung der Behälterwandung verschiedenen Werkzeug hergestellt werden. Die Maße eines separaten Werkzeugs sind dabei vorzugsweise an die Maße des Werkzeugs für die Behälterwandung angepasst. Die Maße des separaten Werkzeugs können bei Bedarf jedoch auch so gewählt werden, dass die jeweilige mit diesem Werkzeug hergestellte Vorrichtung den von der Behälterwandung definierten Aufnahmeraum nicht vollständig ausfüllen kann, so dass das erste Aufnahmevolumen nie null werden kann.

Weitere Vorteile, Merkmale und Anwendungsmöglichkeiten der Erfindung ergeben sich aus der nachfolgenden Beschreibung verschiedener Ausführungsformen und der Zeichnungen. Dabei bilden alle beschriebenen und/oder bildlich dargestellten Merkmale jeweils für sich oder in beliebiger Kombination den Gegenstand der vorliegenden Erfindung, auch unabhängig von ihrer Zusammenfassung in den Ansprüchen oder deren Rückbezügen.

### Kurze Beschreibung der Zeichnungen

Es zeigen schematisch:
- Fig. 1A: eine Schnittdarstellung eines nicht erfindungsgemäßen Behälters mit einer ersten Vorrichtung in Form eines Schlauchs,
- Fig. 1B: eine Explosionsdarstellung des Behälters gemäß der Fig. 1A,
- Fig. 2A: eine Schnittdarstellung einer alternativen Ausführungsform eines nicht erfindungsgemäßen Behälters mit einer ersten Vorrichtung in Form eines als Faltenbalg ausgebildeten Beutels,
- Fig. 2B: eine Schnittdarstellung einer weiteren alternativen Ausführungsform eines nicht erfindungsgemäßen Behälters mit einer ersten Vorrichtung in Form eines als Faltenbalg ausgebildeten Beutels,
- Fig. 2C: eine Schnittdarstellung einer weiteren alternativen Ausführungsform eines nicht erfindungsgemäßen Behälters mit einer ersten Vorrichtung in Form eines als Faltenbalg ausgebildeten Beutels,
- Fig. 3A: eine Schnittdarstellung einer weiteren Ausführungsform eines nicht erfindungsgemäßen Behälters mit einer ersten Vorrichtung und einer zweiten Vorrichtung in Form von Beuteln,
- Fig. 3B: eine Explosionsdarstellung des Behälters gemäß der Fig. 3A,
- Fig. 4A: eine Schnittdarstellung einer weiteren Ausführungsform eines nicht erfindungsgemäßen Behälters mit einer ersten Vorrichtung in Form eines Beutels sowie mit einer Rinne,
- Fig. 4B: eine Explosionsdarstellung des Behälters gemäß der Fig. 4A,
- Fig. 5A: eine Schnittdarstellung einer weiteren Ausführungsform eines Behälters mit einer ersten Vorrichtung und einer zweiten Vorrichtung in Form von Beuteln sowie mit einer Rinne,
- Fig. 5B: eine Explosionsdarstellung des Behälters gemäß der Fig. 5A,
- Fig. 6A: eine Schnittdarstellung einer weiteren Ausführungsform eines nicht erfindungsgemäßen Behälters mit einer ersten Vorrichtung in Form einer Trennwand sowie mit zwei Rinnen,
- Fig. 6B: eine Explosionsdarstellung des Behälters gemäß der Fig. 6A,
- Fig. 7A: eine Schnittdarstellung einer weiteren Ausführungsform eines Behälters mit einer ersten Vorrichtung und einer zweiten Vorrichtung in Form von Trennwänden sowie zwei Rinnen,
- Fig. 7B: eine Explosionsdarstellung des Behälters gemäß der Fig. 7A,
- Fig. 8A: eine Schnittdarstellung einer ersten Ausführungsform einer Öffnung eines Behälters,
- Fig. 8B: eine Explosionsdarstellung der Öffnung gemäß der Fig. 8A,
- Fig. 9A: eine Schnittdarstellung einer weiteren Ausführungsform einer Öffnung eines Behälters,
- Fig. 9B: eine Explosionsdarstellung der Öffnung gemäß der Fig. 9A,
- Fig. 10A: eine Schnittdarstellung einer weiteren Ausführungsform einer Öffnung eines Behälters,
- Fig. 10B: eine Explosionsdarstellung der Öffnung gemäß der Fig. 10A,
- Fig. 11A: eine Schnittdarstellung einer weiteren Ausführungsform einer Öffnung eines Behälters,
- Fig. 11B: eine Explosionsdarstellung der Öffnung gemäß der Fig. 11A,
- Fig. 12A: eine Schnittdarstellung einer weiteren Ausführungsform einer Öffnung eines Behälters,
- Fig. 12B: eine Explosionsdarstellung der Öffnung gemäß der Fig. 12A.

### Beschreibung von Ausführungsformen

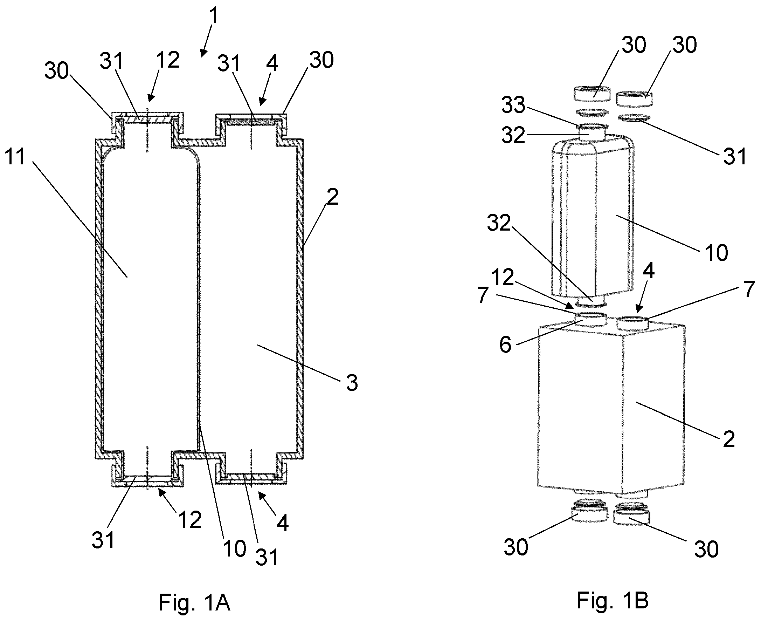

In Fig. 1A wird ein Behälter 1 mit einer Behälterwandung 2 dargestellt, die ein Gesamtvolumen (Aufnahmeraum) und damit ein erstes Aufnahmevolumen 3 definiert. Der Behälter 1 weist eine erste Vorrichtung 10 in Form eines Schlauchs auf, die ein zweites Aufnahmevolumen 11 bildet. Ein erstes verfügbares Aufnahmevolumen wird durch die Differenz des Gesamtvolumens des Behälters und des zweiten Aufnahmevolumens 11 gebildet.

Die erste Vorrichtung 10 weist zwei Vorrichtungsanschlussstutzen 32 mitje einem Vorrichtungsanschlussflansch 33 auf, die in Fig.1B dargestellt sind. Des Weiteren weist der Behälter 1 bzw. die Behälterwandung 2 vier Öffnungen auf, wobei zwei erste Öffnungen 4 dem ersten Aufnahmevolumen 3 zugeordnet sind, und wobei zwei zweite Öffnungen 12 dem zweiten Aufnahmevolumen 11 zugeordnet sind. Die erste Vorrichtung 10 ist mit Hilfe jeweils einer Überwurfmutter 30 und jeweils einer Anschlussplatte 31 an den zweiten Öffnungen 12 verklemmt. Die ersten Öffnungen 4 weisen ebenfalls Überwurfmuttern 30 auf, wobei die Überwurfmuttern 30 der ersten Öffnungen 4 die Anschlussplatten 31 verklemmen.

Die Anschlussplatten 31 sind in Fig. 1A (wie auch in allen anderen Figuren) lediglich schematisch dargestellt. Es versteht sich, dass die Anschlussplatten 31 jeweils geeignete Durchgangsöffnungen aufweisen können, durch welche ein Medium dem zugeordneten Aufnahmevolumen zugeleitet oder von diesem abgeleitet werden kann, ohne dass dazu die Überwurfmutter 30 gelöst und die Anschlussplatte 31 entfernt werden muss. Geeignete Durchgangsöffnungen bieten dann Anschlussmöglichkeiten für Rohrstutzen, Einfüllstutzen, Schlauchtüllen und dergleichen oder sind durch derartige Elemente gebildet.

Fig. 1B zeigt den Behälter 1 aus Fig. 1A in einer Explosionsdarstellung, wobei insbesondere die Vorrichtungsanschlussstutzen 32 und Vorrichtungsanschlussflansche 33 der ersten Vorrichtung 10 genauer dargestellt sind. Sobald die erste Vorrichtung 10 in den Behälter 1 eingeführt ist, ragt der Vorrichtungsanschlussstutzen 32 durch einen Öffnungshals 6 der Behälterwandung 2, wobei die Vorrichtungsanschlussflansche 33 und die Anschlussplatten 31 mit Hilfe von Überwurfmuttern 30 an Anlageflächen 7 der Öffnungshälse 6 des Behälters 1 geklemmt werden. Hierzu weisen die Öffnungshälse 6 vorzugsweise Außengewinde auf, die mit einem Innengewinde der Überwurfmuttern 30 in Eingriff kommen, wobei durch die Verschraubung der Überwurfmuttern 30 mit dem Außengewinde der Öffnungshälse 6 die Vorrichtungsanschlussstutzen 32 und die Anschlussplatten 31 verklemmt werden.

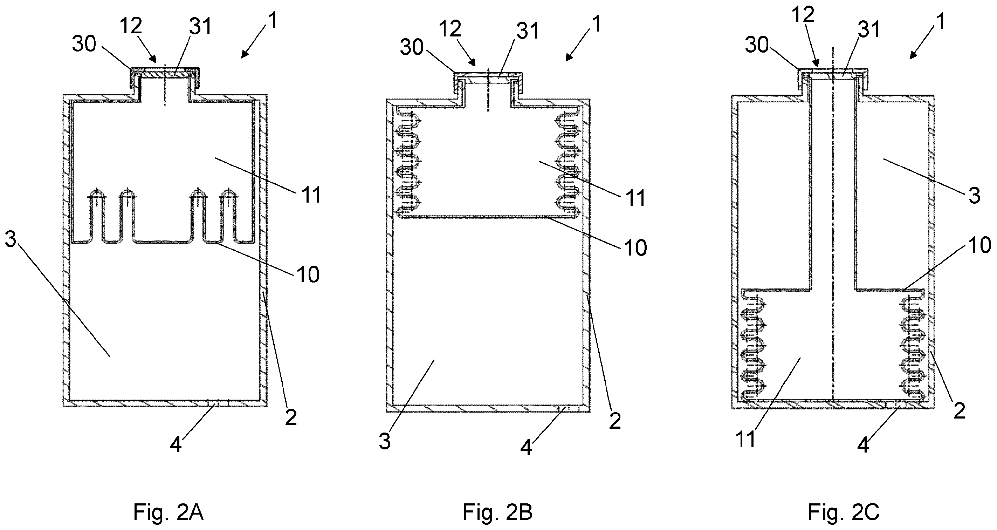

Fig. 2A bis Fig. 2C zeigen verschiedene Ausführungsformen eines erfindungsgemäßen Behälters 1 mit einer in Form eines Beutels ausgestalteten ersten Vorrichtung 10. Die erste Vorrichtung 10 ist in den Figuren 2A bis 2C dabei als Faltenbalg ausgestaltet, wobei der Faltenbalg in Fig. 2A insbesondere für eine horizontale Erstreckung prädestiniert ist, und wobei die Faltenbalge der Figuren 2B und 2C für eine vertikale Erstreckung prädestiniert sind. Die ersten Vorrichtungen 10 sind in vergleichbarer Weise wie in den Figuren 1A und 1B mit der zweiten Öffnung 12 über eine Überwurfmutter 30 und eine Anschlussplatte 31 verklemmt. Der Behälter 1 weist am Boden der Behälterwandung 2 zudem eine erste Öffnung 4 auf. In Fig. 2C liegt dabei die Wandung der ersten Vorrichtung 10 an der Öffnung 4 an und verschließt diese womöglich. Bei zunehmender Befüllung des zweiten Aufnahmevolumens 11 breitet sich die erste Vorrichtung 10 in Richtung der zweiten Öffnung 12 aus, wobei der Druck innerhalb des Behälters 1 bzw. innerhalb des ersten Aufnahmevolumens 3 allmählich zunimmt. Ein Druckausgleich könnte gegebenenfalls über die erste Öffnung 4 erfolgen.

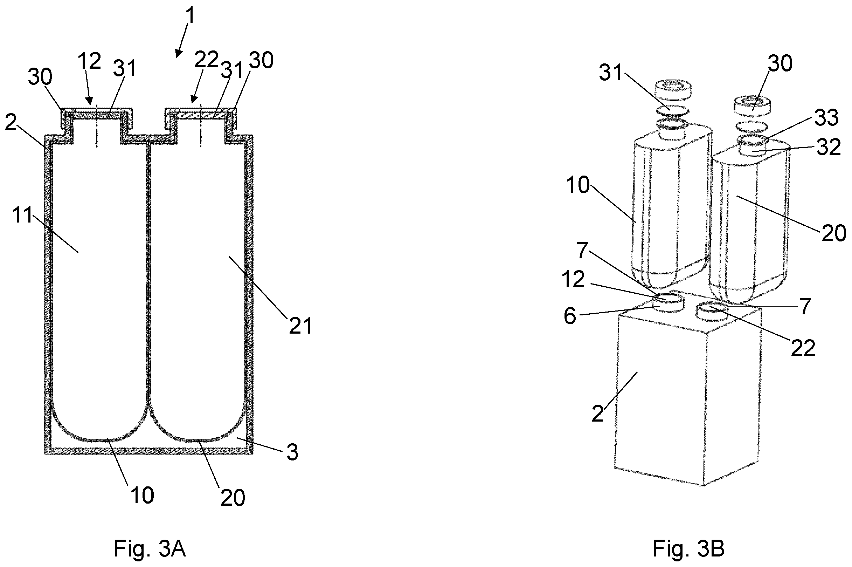

Fig. 3A zeigt eine weitere Ausführungsform eines erfindungsgemäßen Behälters 1 mit einer ersten Vorrichtung 10 mit einem zweiten Aufnahmevolumen 11 und einer zweiten Vorrichtung 20 mit einem dritten Aufnahmevolumen 21. Das von der Behälterwandung 2 des Behälters 1 begrenzte Gesamtvolumen des Behälters ist von der ersten Vorrichtung 10 und der zweiten Vorrichtung 20 nicht vollständig ausgefüllt, sodass auch das verfügbare erste Aufnahmevolumen sichtbar ist. Die erste und zweite Vorrichtung 10 und 20 sind in Fig. 3A in Form von Beuteln bereitgestellt. Die erste Vorrichtung 10 ist zudem an eine zweite Öffnung 12 und die zweite Vorrichtung 20 an eine dritte Öffnung 22 angeschlossen. Dabei sind, wie bereits in den vorherigen Ausführungsformen beschrieben, die Vorrichtungsanschlussflansche der jeweiligen Vorrichtungen mit dem Öffnungshals der Öffnungen über Überwurfmuttern verklemmt. In der Behälterwandung 2 kann eine erste Öffnung des ersten Aufnahmevolumens 3 vorgesehen sein, beispielsweise zum Druckausgleich oder zum Zuführen und/oder Abführen eines Mediums. Dies ist in Figur 3A nicht dargestellt.

Fig. 3B zeigt in einer Explosionsdarstellung erneut besonders deutlich die Vorrichtungsanschlussstutzen 32, die Vorrichtungsanschlussflansche 33, die Öffnungshälse 6 sowie die Anlageflächen 7 des Behälters 1.

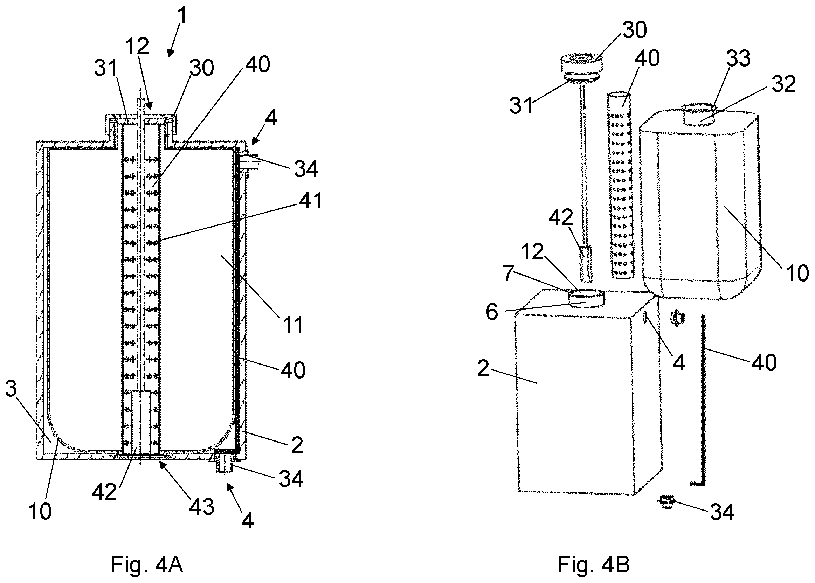

In Fig. 4A wird ein Behälter 1 mit einer ersten Vorrichtung 10 in Form eines Beutels dargestellt, wobei im Innern des Beutels eine mit einer Pumpe 42 versehene Rinne 40 angeordnet ist. Die Rinne 40 weist an ihrer Mantelfläche Rinnenöffnungen 41 auf. Im Behälterboden weist die Behälterwandung 2 eine Vertiefung 43 auf, die zur Aufnahme eines Endbereichs der Rinne 40 eingerichtet ist. Hierdurch kann ein seitliches Verrutschen der Rinne 40 verhindert werden. Zudem ist es möglich, dass die Rinne 40 zwischen der Vertiefung 43 in der Behälterwandung 2 und der am Vorrichtungsanschlussflansch 33 anliegenden Anschlussplatte 31 verklemmt wird. Auch wenn es hier nicht dargestellt ist, könnte die Anschlussplatte 31 hierzu ebenfalls eine geeignete Vertiefung, Nut, Vorsprünge etc. aufweisen. Die in der Rinne 40 angeordnete Pumpe 42 ist eine Tauchpumpe, die dazu vorgesehen ist, ein Medium aus dem zweiten Aufnahmevolumen 11 abzupumpen und/oder einzupumpen.

Zusätzlich umfasst der Behälter 1 in Fig. 4A eine zweite Rinne 40, die an der Behälterwandung 2 anliegt und innerhalb des ersten Aufnahmevolumens 3 angeordnet ist. Diese Rinne 40 weist keine Pumpe auf und dient daher vorrangig dem Abführen des Mediums aus dem ersten Aufnahmevolumen 3 durch die am Behälterboden angeordnete erste Öffnung 4. Auch diese Rinne 40 weist entlang ihrer Längserstreckung mehrere Rinnenöffnungen (nicht dargestellt) auf, über die das Füllmedium in den Innenraum der Rinne 40 gelangt. Die Rinnenöffnungen 41 beider Rinnen 40 weisen Vorsprünge auf, die in den Hohlraum bzw. das Innere der Rinne 40 mit Neigung in Richtung der ersten Öffnung 4 (für die Rinne 40, die im ersten Aufnahmevolumen 3 angeordnet ist) bzw. in Richtung der Pumpe 42 (für die Rinne 40, die im zweiten Aufnahmevolumen 11 angeordnet ist) ragen, d.h. in Strömungsrichtung des Mediums innerhalb der Rinne, damit die Wahrscheinlichkeit verringert wird, dass das Füllmedium durch eine Rinnenöffnung wieder austritt. Für die Rinne 40, die innerhalb des zweiten Aufnahmevolumens 11 angeordnet ist, kann so eine bessere Zuführung des Mediums zur Pumpe 42 erreicht werden.

Die ersten Öffnungen 4 des Behälters weisen je einen Behälteranschlussstutzen 34 auf. Ein solcher Behälteranschlussstutzen 34 kann beispielsweise in die Behälterwandung eingeschraubt, eingepresst, an diese angeformt oder mit dieser verschweißt werden. Die Befestigung bzw. Verklemmung der ersten Vorrichtung 10 im Behälter 1 erfolgt, wie bereits zuvor beschrieben, über die Verschraubung einer Überwurfmutter 30 mit dem Außengewinde eines Öffnungshalses 6 des Behälters 1, wobei die Überwurfmutter 30 den Vorrichtungsanschlussflansch 33 der ersten Vorrichtung 10 zusammen mit einer Anschlussplatte 31 auf der Anlagefläche 7 des Öffnungshalses 5 verklemmt.

Fig. 4B zeigt eine Explosionsdarstellung des Behälters 1 aus Fig. 4A.

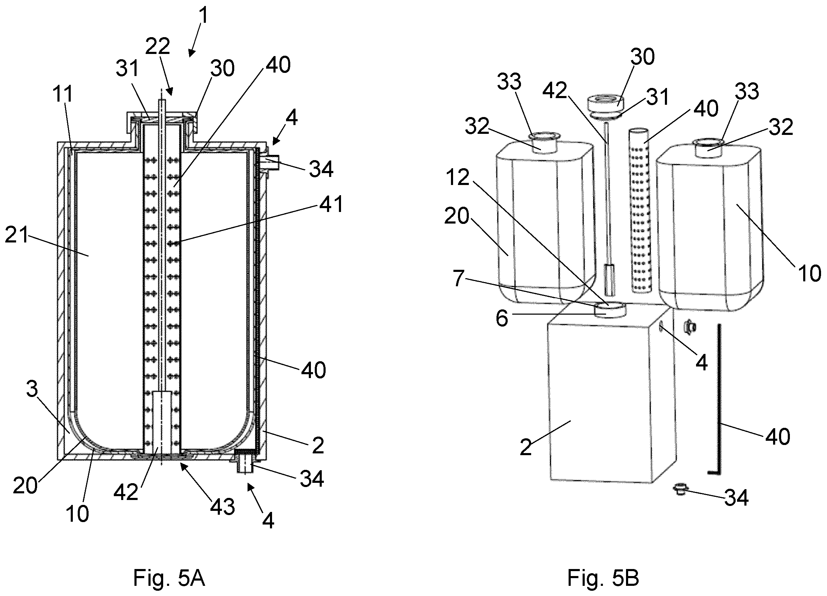

Die Ausführungsform des Behälters 1 in Fig. 5A unterscheidet sich von dem Behälter 1 aus Fig. 4A darin, dass eine zweite Vorrichtung 20 in Form eines Beutels innerhalb der ersten Vorrichtung 10 angeordnet ist. Der Behälter 1 gemäß Fig. 5A weist somit drei Aufnahmevolumina, ein verfügbares erstes Aufnahmevolumen, ein zweites Aufnahmevolumen 11 und ein drittes Aufnahmevolumen 21, auf, die zusammen das Gesamtvolumen des Behälters bilden. Wie auch schon die Ausführungsform des Behälters 1 aus Fig. 4A, weist auch der Behälter 1 in Fig. 5A zwei Rinnen 40 auf, wobei die eine Rinne 40 innerhalb des dritten Annahmevolumens 21 zusammen mit einer Pumpe 42 angeordnet ist, und wobei die andere Rinne 40, wie auch schon in Fig. 4A, entlang der Behälterwandung 2 im ersten Aufnahmevolumen 3 angeordnet ist.

Die zweite Vorrichtung 20 wird von der ersten Vorrichtung 10 umschlossen, sodass das zweite Aufnahmevolumen 11 zwischen der Wandung der ersten Vorrichtung 10 und der Wandung der zweiten Vorrichtung 20 angeordnet ist. Die Vorrichtungsanschlussstutzen 32 bzw. die Vorrichtungsanschlussflansche 33 der beiden Vorrichtungen 10 und 20 sind gemeinsam am Öffnungshals 6 bzw. an der Anlagefläche 7 des Behälters 1 durch die Überwurfmutter 30 und die Anschlussplatte 31 verklemmt. Die dritte Öffnung 22 gewährt somit ausschließlich eine mediale Verbindung zum dritten Aufnahmevolumen 21. Das heißt, dass ein Medium ausschließlich dem dritten Aufnahmevolumen 21 zugeführt und/oder von diesem entnommen werden kann. Das zweite Aufnahmevolumen 11 ist im Normalbetrieb nicht zur Aufnahme eines Mediums vorgesehen, kann aber beispielsweise im Fall einer Beschädigung der ersten Vorrichtung 10 ein in dem dritten Aufnahmevolumen 21 aufgenommenes Medium aufnehmen. Es versteht sich, dass zum Druckausgleich eine geeignete zweite Öffnung 12 (in Fig. 5A nicht dargestellt) zur Entlüftung des zweiten Aufnahmevolumens 11 vorgesehen sein kann. Das verfügbare erste Aufnahmevolumen ändert sich in Abhängigkeit der Befüllung des dritten Aufnahmevolumens 21. Um eine ausreichende Dichtheit im Bereich der Vorrichtungsanschlussstutzen 32 der beiden Vorrichtungen 10 und 20 zu gewährleisten, können diese und/oder die Vorrichtungsanschlussflansche auch verschweißt werden. Alternativ oder ergänzend könnte auch die Beutelwandung der ersten Vorrichtung 10 aus einem flexiblen Material und der Vorrichtungsanschlussstutzen 32 der ersten Vorrichtung 10 aus einem festen Material geformt werden, sodass der Vorrichtungsanschlussstutzen 32 mit einem Außengewinde versehen werden kann. Der Öffnungshals 6 der dritten Öffnung 22 könnte dementsprechend mit einem Innengewinde versehen werden, sodass der Vorrichtungsanschlussstutzen 32 der ersten Vorrichtung 10 mit dem Öffnungshals 6 verschraubt werden könnte.

In Fig. 5B wird eine Explosionsdarstellung des Behälters 1 aus Fig. 5A gezeigt. Hierbei wird deutlich sichtbar, dass die Vorrichtungsanschlussstutzen 32 der beiden Vorrichtungen 10 und 20 unterschiedlich lang sind, sodass der Vorrichtungsanschlussflansch 33 des längeren Vorrichtungsanschlussstutzens 32 der zweiten Vorrichtung 20 auf dem Vorrichtungsanschlussflansch 33 des kürzeren Vorrichtungsanschlussstutzens 32 der ersten Vorrichtung 10 zum Aufliegen kommt, sobald die zweite Vorrichtung 20 in die erste Vorrichtung 10 eingeführt ist. Ebenso wie die zuvor beschriebene Verschraubung des Öffnungshalses 6 mit dem Vorrichtungsanschlussstutzen 32 der ersten Vorrichtung 10, könnte auch der Vorrichtungsanschlussstutzen 32 der zweiten Vorrichtung 20 über ein Außengewinde mit einem Innengewinde des Vorrichtungsanschlussstutzen 32 der ersten Vorrichtung 10 verschraubt werden. Alternativ oder ergänzend können die Vorrichtungsanschlussstutzen 32 und/oder die Vorrichtungsanschlussflansche 33 verklemmt und/oder verschweißt werden.

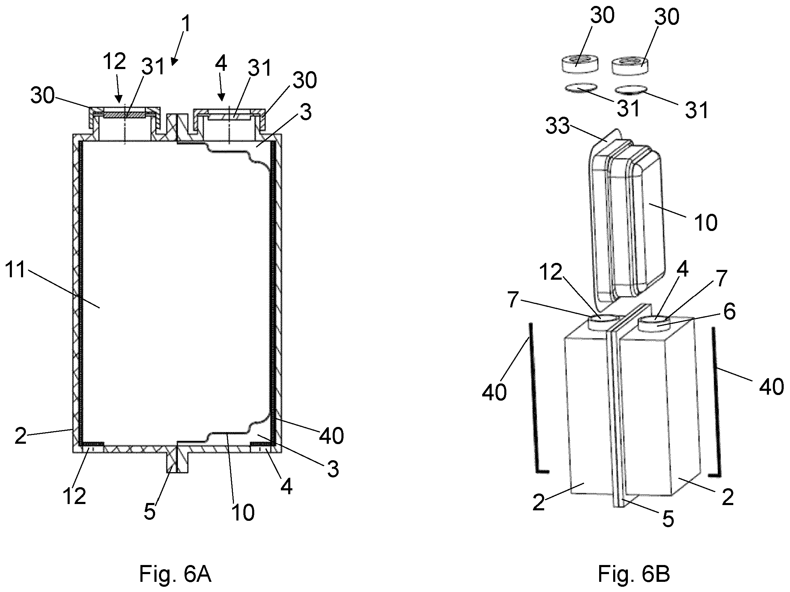

In Fig. 6A wird eine weitere Ausführungsform eines Behälters 1 gezeigt, wobei die erste Vorrichtung 10 eine Trennwand umfasst. Zudem ist der Behälter 1 in zwei Behälterhälften geteilt, wobei die Behälterhälften je einen Behälterflansch 5 aufweisen, sodass die beiden Behälterhälften im Bereich der Behälterflansche 5 zum Anliegen kommen. Dabei können die Behälterhälften beispielsweise verschweißt oder über sonstige Mittel zusammengehalten werden. Die Trennwand der ersten Vorrichtung 10 weist ebenfalls einen Vorrichtungsanschlussflansch 33 auf, der bevorzugt zwischen die beiden Behälterflansche 5 geklemmt und/oder in diesem Bereich verschweißt wird. Die Trennwand unterteilt das Gesamtvolumen des Behälters in zwei Aufnahmevolumina, ein verfügbares erstes Aufnahmevolumen und ein zweites Aufnahmevolumen 11. Beide Aufnahmevolumina 3 und 11 weisen dabei im Bereich der Behälterwandung 2 eine Rinne 40 auf. Die Rinne verbindet die Aufnahmevolumina 3 und 11 jeweils mit einer Öffnung 4 und 12. Die Rinnen 40 können dabei, hier nicht dargestellte, Rinnenöffnungen 41 aufweisen. Neben den mit den Rinnen 40 verbundenen Öffnungen 4 und 12 weist jedes Aufnahmevolumen 3 und 11 auf der den Öffnungen 4 und 12 an der Unterseite des Behälters gegenüberliegenden Oberseite ebenfalls eine Öffnung auf. Die erste Öffnung 4 an der Oberseite des Behälters kann somit für die Befüllung und/oder die Entnahme eines Mediums aus dem ersten Aufnahmevolumen 3 verwendet werden. Die zweite Öffnung 12 kann für die Befüllung und/oder die Entnahme eines Mediums aus dem zweiten Aufnahmevolumen 11 verwendet werden. Beide Öffnungen 4 und 12 weisen dabei je eine Anschlussplatte 31, beispielsweise zum Anschließen externer Vorrichtungen, Maschinen etc. auf, die an den Anlagenflächen 7 der Öffnungshälse 6 über Überwurfmutter 30 festgeklemmt sind.

Fig. 6B zeigt eine Explosionsdarstellung des Behälters 1 aus Fig. 6A.

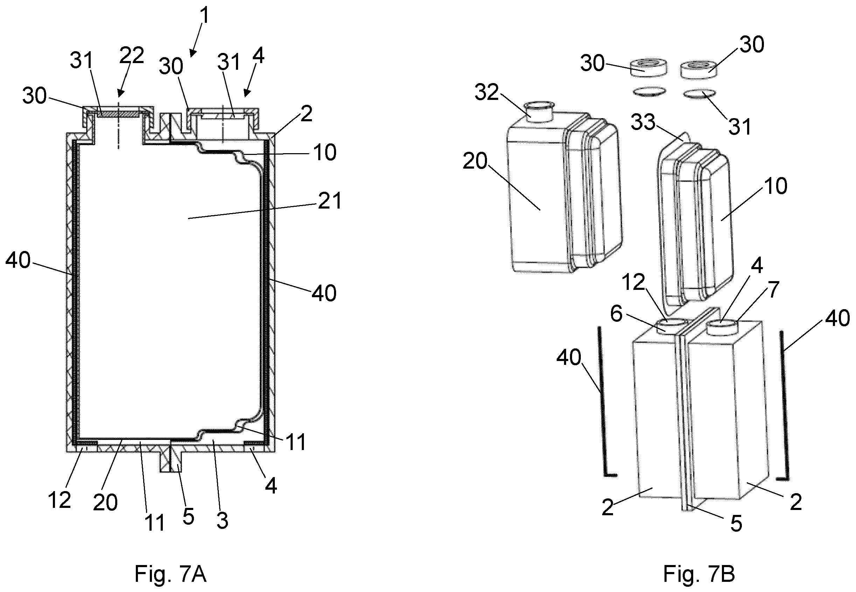

Fig. 7A zeigt eine ähnliche Ausführungsform der vorliegenden Erfindung wie Fig. 6A, wobei der Behälter 1 in Fig. 7A zusätzlich eine zweite Vorrichtung 20 in Form einer Trennwand aufweist. Der Behälter 1 in Fig. 7A umfasst somit drei Aufnahmevolumina, ein erstes Aufnahmevolumen 3, ein zweites Aufnahmevolumen 11 und ein drittes Aufnahmevolumen 21. Die erste Vorrichtung 10 wird über den Vorrichtungsanschlussflansch 33 zwischen den Behälterflanschen 5 des Behälters 1 befestigt. Die zweite Vorrichtung 20 ist innerhalb des zweiten Aufnahmevolumens 11 angeordnet und weist eine eigene Wandung auf, die ein drittes Aufnahmevolumen 21 im Wesentlichen vollständig umschließt. Die zweite Vorrichtung 20 ist dabei über einen Vorrichtungsanschlussstutzen 32 an dem Öffnungshals 6 bzw. über einen Vorrichtungsanschlussflansch 33 an der Anlagefläche 7 der dritten Öffnung 22 befestigt. Die dritte Öffnung 22 weist zudem eine Anschlussplatte 31 sowie eine Überwurfmutter 30 auf und ist dazu eingerichtet, ein Medium dem dritten Aufnahmevolumen 21 zuzuführen oder von diesem abzuführen. Gegenüber der dritten Öffnung 22 befindet sich im Bodenbereich des Behälters eine zweite Öffnung 12 für das zweite Aufnahmevolumen 11. Die zweite Öffnung 12 ist dabei über eine Rinne 40 mit dem zweiten Aufnahmevolumen 11 verbunden. Bevorzugt weist die Rinne 40 dabei, hier nicht dargestellte, Rinnenöffnungen 41 und Vorsprünge auf. Die Rinne 40 ist entlang der Behälterwandung 2 angeordnet. Das erste Aufnahmevolumen 3 weist zwei erste Öffnungen 4 auf. Eine der ersten Öffnungen 4 ist dabei auf der Seite des Behälters angeordnet, auf der auch die dritte Öffnung 22 angeordnet ist. Diese erste Öffnung 4 weist eine Anschlussplatte 31 sowie eine Überwurfmutter 30 auf. Gegenüber dieser ersten Öffnung 4 befindet sich eine zweite erste Öffnung 4, die mit einer Rinne 40 verbunden ist. Die Rinne 40 ist entlang der Behälterwandung 2 angeordnet und verbindet das erste Aufnahmevolumen 3 mit der ersten Öffnung 4. Auch die Rinne 40, die das erste Aufnahmevolumen 3 mit der ersten Öffnung 4 verbindet, weist vorzugsweise, hier nicht dargestellte, Rinnenöffnungen 41 und Vorsprünge auf.

Fig. 7B zeigt eine Explosionsdarstellung der Behälterausführungsform gemäß Fig. 7A.

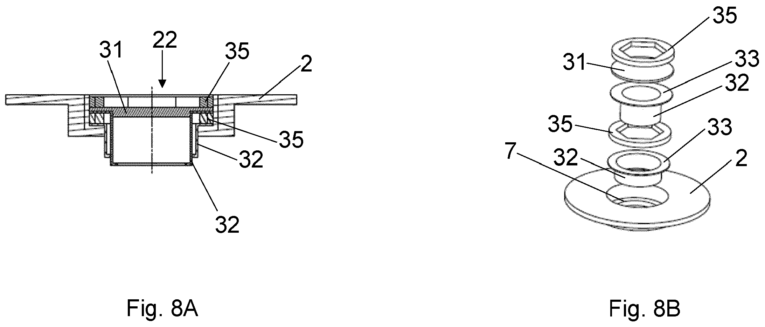

Fig. 8A zeigt einen Behälterausschnitt im Bereich einer dritten Öffnung 22 in Schnittdarstellung. Zu sehen sind demnach die Behälterwandung 2 sowie die beiden Vorrichtungsanschlussstutzen 32 der jeweiligen Vorrichtungen 10 und 20 (hier nicht zu sehen). Die Vorrichtungsanschlussstutzen 32 weisen jeweils einen Vorrichtungsanschlussflansch 33 auf. Der kürzere, radial äußere Vorrichtungsanschlussstutzen 32 kommt im zusammengebauten Zustand mit seinem Vorrichtungsanschlussflansch 33 auf eine Anlagefläche 7 der Behälterwandung 2 zum Anliegen. Dabei wird mit Hilfe eines Gewinderings 35 der Vorrichtungsanschlussflansch 33 an der Anlagefläche 7 befestigt, wobei der Gewindering 35 mit seinem Außengewinde in der Behälterwandung 2 verschraubt wird. Zum Befestigen des Gewinderings 35 weist der Gewindering 35 einen Innensechskant auf, in den ein Werkzeug eingreifen kann. Der längere, radial innere Vorrichtungsanschlussstutzen 32 ist im zusammengebauten Zustand innerhalb des kürzeren, radial äußeren Vorrichtungsanschlussstutzen 32 angeordnet und liegt mit dem Vorrichtungsanschlussflansch 33 auf dem Gewindering 35 auf. Der kürzere, äußere Vorrichtungsanschlussstutzen 32 ist folglich für ein äußeres, zweites Aufnahmevolumen 11 vorgesehen, wobei der längere, innere Vorrichtungsanschlussstutzen 32 für ein inneres, drittes Aufnahmevolumen 21 vorgesehen ist. Das zweite Aufnahmevolumen 11 sowie das dritte Aufnahmevolumen 21 sind an dieser Stelle nicht dargestellt. Zur Befestigung des längeren, inneren Vorrichtungsanschlussstutzens 32, der für die Zu- und/oder Abfuhr eines Mediums in ein inneres, drittes Aufnahmevolumen 21 vorgesehen ist, wird der Vorrichtungsanschlussstutzen 32 über einen weiteren Gewindering 35 zusammen mit einer Anschlussplatte 31 in der Vertiefung der Behälterwandung 2 befestigt. Bei dieser Ausführungsform einer dritten Öffnung 22 schließen die Vorrichtung und Anschlusskomponenten planar mit der Behälterwandung 2 ab. Es ist offensichtlich, dass anstatt zweier Vorrichtungsanschlussstutzen 32 auch nur ein Vorrichtungsanschlussstutzen 32 bzw. ein Vorrichtungsanschlussflansch 33 über einen Gewindering 35 und/oder eine Anschlussplatte 31 an einer Öffnung befestigt werden kann.

Fig. 8B zeigt eine entsprechende Explosionsdarstellung der einzelnen Komponenten gemäß der Darstellung in Fig. 8A.

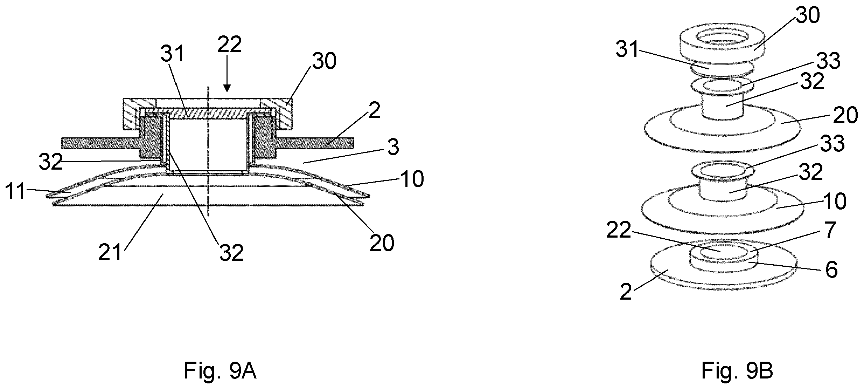

In Fig. 9A wird ein alternativer Behälteranschluss einer dritten Öffnung 22 in Schnittdarstellung gezeigt. Hierbei ist ein radial innerer Vorrichtungsanschlussstutzen 32 innerhalb eines radial äußeren Vorrichtungsanschlussstutzen 32 angeordnet, wobei die Vorrichtungsanschlussflansche 33 im zusammengebauten Zustand aufeinander aufliegen. Der innere Vorrichtungsanschlussstutzen 32 ist hierbei dem dritten Aufnahmevolumen 21 zugeordnet. Der äußere Vorrichtungsanschlussstutzen 32 ist dem zweiten Aufnahmevolumen 11 zugeordnet. Im zusammengebauten Zustand kommen die beiden Vorrichtungsanschlussflansche 33 auf der Anlagefläche 7 der Öffnungshälse 6 der Behälterwandung 2 zum Aufliegen und werden hier zusammen mit einer Anschlussplatte 31 über eine Überwurfmutter 30 befestigt. Das außerhalb der Vorrichtungen 10 und 20 liegende Aufnahmevolumen bildet das verfügbare erste Aufnahmevolumen.

Fig. 9B zeigt eine entsprechende Explosionsdarstellung der Fig. 9A.

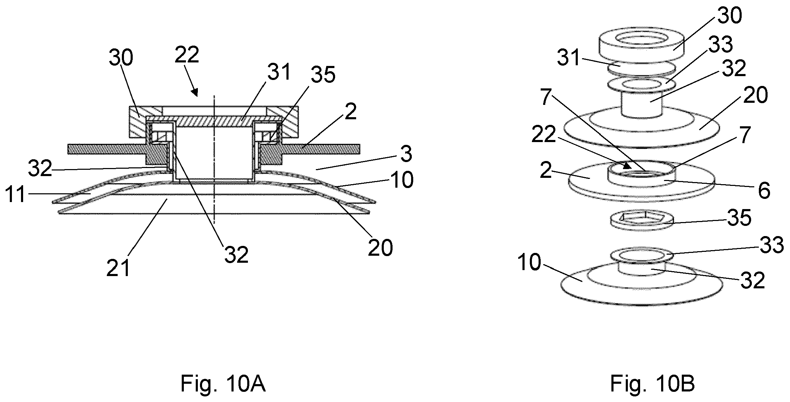

Fig. 10A zeigt eine weitere alternative Ausführungsform eines Behälteranschlusses einer dritten Öffnung 22 in Schnittdarstellung. Im Gegensatz zu der Alternative aus Fig. 9A weist der Öffnungshals 6 in Fig. 10A zwei Anlageflächen 7 auf. Eine innere Anlagefläche 7 kommt dabei im zusammengebauten Zustand mit dem Vorrichtungsanschlussflansch 33 der ersten Vorrichtung 10 zum Aufliegen und wird hier mit Hilfe eines Gewinderings 35 befestigt. Eine äußere Anlagefläche 7 kommt im zusammengebauten Zustand mit dem Vorrichtungsanschlussflansch 33 der zweiten Vorrichtung 20 zum Anliegen und wird hier mit Hilfe einer Überwurfmutter 30 zusammen mit einer Anschlussplatte 31 befestigt. Der Vorrichtungsanschlussflansch 33 der ersten Vorrichtung 10 und der Vorrichtungsanschlussflansch 33 der zweiten Vorrichtung 20 sind dabei axial voneinander beabstandet.

In Fig. 10B wird eine Explosionsdarstellung der Ausführungsform aus Fig. 10A gezeigt.

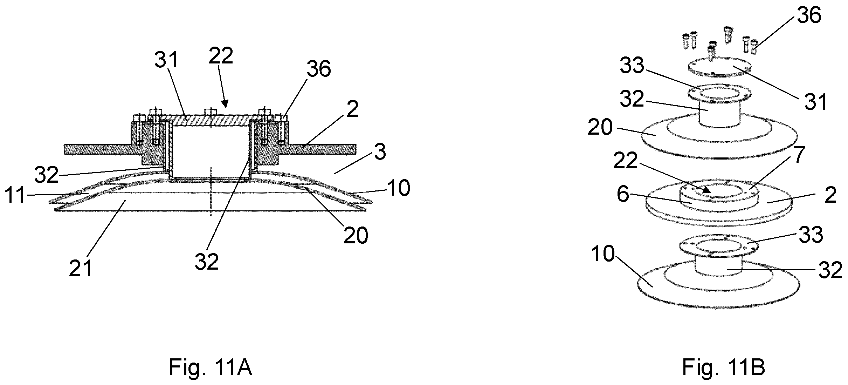

Fig. 11A zeigt einen Behälteranschluss einer dritten Öffnung 22, wobei die Anlagefläche 7 des Öffnungshalses 6 der Behälterwandung 2 Bohrungen zur Aufnahme von Schrauben 36 aufweist. Die Schrauben 36 dienen zur Verschraubung der Vorrichtungsanschlussflansche 33 zusammen mit einer Anschlussplatte 31 an dem Öffnungshals 6. Dementsprechend weisen auch die Anschlussplatte 31 sowie die Vorrichtungsanschlussflansche 33 entsprechende Bohrungen auf.

Fig. 11B zeigt eine Explosionsdarstellung der Vorrichtung gemäß Fig. 11A.

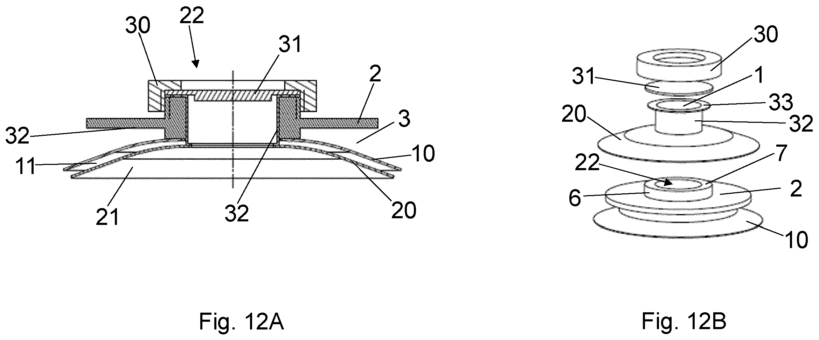

In Fig. 12A wird eine Ausführungsform eines Behälteranschlusses einer dritten Öffnung 22 dargestellt, wobei lediglich die zweite Vorrichtung 20 einen Vorrichtungsanschlussstutzen 32 und dementsprechend auch einen Vorrichtungsanschlussflansch 33 aufweist. Die erste Vorrichtung 10 ist zumindest bereichsweise mit der Behälterwandung 2 verschweißt. Der Vorrichtungsanschlussstutzen 32 der zweiten Vorrichtung 20 ragt im zusammengebauten Zustand durch den Öffnungshals 6 der Behälterwandung 2 und liegt mit dem Vorrichtungsanschlussflansch 33 auf der Anlagefläche 7 auf. Eine Überwurfmutter 30 befestigt den Vorrichtungsanschlussflansch 33 zusammen mit einer Anschlussplatte 31 an dem Öffnungshals 6. Auch wenn der Behälter wie schon zuvor in den Figs. 8A bis 11B nicht vollständig dargestellt ist, sind die Aufnahmevolumina 3, 11, und 21 gezeigt.

Fig. 12B zeigt eine Explosionsdarstellung der Ausführungsform gemäß Fig. 12A.

Nachdem ein Behälter 1 mit einer Behälterwandung 2 und einem ersten Aufnahmevolumen 3 entsprechend den sich aus der späteren Verwendung ergebenden Bedürfnissen durch geeignete Verfahren wie Blasformen, Spritzgießen oder Tiefziehen, vorzugsweise durch Rotationsformen, gefertigt wurde, werden in Abhängigkeit von den Bedürfnissen, die sich insbesondere aus der Art des Füllmediums ergeben, eine erste Vorrichtung 10 und gegebenenfalls eine oder mehrere zweite Vorrichtungen 20 durch eine Öffnung in der Behälterwandung 2 oder dadurch, dass der Behälter 1 mehrere zusammensetzbare Komponenten, beispielsweise zwei Behälterhälften, aufweist, in den Behälter 1 eingesetzt. Wenn die Vorrichtungen 10 und 20 ein flexibles Material aufweisen, können die Vorrichtungen 10 und 20 einfach durch eine Öffnung eingeführt werden.

Je nach Anwendung kann dabei anschließend eine Rinne 40 mit einer Pumpe 42 in den Behälter und/oder in eine der Vorrichtungen eingeführt werden. Alternativ oder ergänzend kann wenigstens eine Rinne 40 bereits während der Fertigung des Behälters 1 in diesen integriert werden.

Für den Fall, dass der Behälter für eine Reinigungsmaschine benötigt wird, wobei die Reinigungsmaschine einen Reinigungsprozess aufweist, bei dem zunächst eine Wasserentnahme, dann eine Wasseraufheizung, eine Vermischung des Wassers mit Reinigungsmittel, eine Reinigung, und abschließend eine Aufnahme des verunreinigten Wassers erfolgt, benötigt der Behälter drei Aufnahmevolumina. Ein erstes Aufnahmevolumen 3 für das verunreinigte Wasser, ein zweites Aufnahmevolumen 11 für das frische Wasser und ein drittes Aufnahmevolumen 21 für das Reinigungsmittel. Vorzugsweise wird das zweite Aufnahmevolumen 11 durch eine erste Vorrichtung 10 in Form eines Beutels und das dritte Aufnahmevolumen 21 durch eine zweite Vorrichtung 20 in Form eines Beutels bereitgestellt. Da Reinigungsprozesse für gewöhnlich mehr Wasser als Reinigungsmittel benötigen, wird das zweite Aufnahmevolumen 11 vor Beginn des Reinigungsprozesses stärker befüllt als das mit Reinigungsmittel befüllte dritte Aufnahmevolumen 21. Das für das verunreinigte Wasser vorgesehene erste Aufnahmevolumen 3 ist bevorzugt leer.

Um das entsprechende Medium den Aufnahmevolumina 3, 11 und 21 zuzuführen bzw. aus diesen entnehmen zu können, ist jedem Aufnahmevolumen eine Öffnung zugeordnet. Das erste Aufnahmevolumen 3 weist bevorzugt zwei Öffnungen 4, eine an der Behälteroberseite angeordnete Öffnung für die Zuführung und eine am Behälterunterseite angeordnete Öffnung für die Entnahme, auf. Die erste Vorrichtung 10 kann mit einem Vorrichtungsanschlussflansch 33 mit einer Anlagefläche 7 eines Öffnungshalses 6 einer zweiten Öffnung 12 über eine Anschlussplatte 31 und eine Überwurfmutter 30 verklemmt werden. Gleiches gilt für die zweite Vorrichtung 20, die in einer dritten Öffnung 22 verklemmt werden kann. Die ersten Öffnungen 4 können jeweils mit einem Behälteranschlussstutzen 34 versehen werden.

Eine Rinne 40 wird für die Anwendung in einem Reinigungsprozess nicht zwingend benötigt, da das zweite und dritte Aufnahmevolumen 11 und 21 über die Öffnungen 12 und 22 entleert werden und das verfügbare erste Aufnahmevolumen sich erst allmählich während des Reinigungsprozesses füllt. Am Ende des Reinigungsprozesses sind vorzugsweise das zweite und dritte Aufnahmevolumen 11 und 21 entleert und das verfügbare erste Aufnahmevolumengefüllt. Das verfügbare erste Aufnahmevolumen entspricht dann dem Gesamtvolumen des Behälters.

Für die Entnahme kann eine Pumpe 42 direkt in die Aufnahmevolumina integriert werden oder aber eine externe Pumpe, die an die entsprechenden Öffnungen angeschlossen ist, kann für die Entnahme der Medien sorgen. Für die Wasseraufheizung kann ebenfalls eine Temperaturregelungseinheit direkt in das zweite Aufnahmevolumen 11 integriert werden. Zudem kann die Wandung der ersten Vorrichtung 10 eine Isolierung aufweisen, damit die Wärme nicht auch die übrigen Aufnahmevolumina beeinflusst.

Wenn während des Reinigungsprozesses 1 Liter aufgeheiztes Wasser aus dem zweiten Aufnahmevolumen 11 entnommen wird und in einer Reinigungsmaschine mit 50 ml Reinigungsmittel aus dem dritten Aufnahmevolumen 21 vermischt wird, vergrößert sich das Aufnahmevolumen 3 um 1,05 Liter. Das dritte Aufnahmevolumen 3 kann mit dem verunreinigten Wasser, bestehend aus Wasser, Reinigungsmittel und Schmutzpartikeln, über die erste Öffnung 4 an der Behälteroberseite befüllt werden. Nach der Beendigung kann das verunreinigte Wasser über die erste Öffnung 4 an der Behälterunterseite in einen Tankwagen, einen Abfluss etc. entleert werden.

Um eine Vermischung des mit Reinigungsmittel befüllten dritten Aufnahmevolumens 21 mit einem der anderen Aufnahmevolumina 3 und 11 nach Möglichkeit zu vermeiden, beispielsweise weil das Reinigungsmittel sehr wertvoll ist und durch die Vermischung nicht mehr verwendbar wäre, kann die erste zweite Vorrichtung 20 in Form eines Beutels auch in eine zusätzliche zweite Vorrichtung 20 in Form eines Beutels integriert werden und ähnlich den Figuren 5A und 5B sowie den Figuren 8A bis 12B an der dritten Öffnung 22 befestigt werden. Hierbei entsteht ein viertes Aufnahmevolumen, wobei allerdings weiterhin lediglich drei Aufnahmevolumina mit Medien befüllt werden können. Da der erste Beutel in einen zweiten Beutel integriert wurde, weist das eine Aufnahmevolumen eine doppelte Wandung auf. Wenn die innere Vorrichtung bzw. die Wandung der inneren Vorrichtung beschädigt wird, könnte das Reinigungsmittel somit von der äußeren Wandung aufgefangen werden.

Um die Vorrichtungen 10 und 20 und den Behälterinnenraum zu reinigen und beispielsweise einer Schimmelbildung vorzubeugen, können die Vorrichtungen 10 und 20 durch Lösen der Überwurfmuttern 30 aus den Öffnungen 12 und 22 entnommen und gereinigt werden.

Der Reinigungsprozess der Reinigungsmaschine wurde hier nur exemplarisch beschrieben. Selbstverständlich bestehen weitere Anwendungsmöglichkeiten eines erfindungsgemäßen Behälters 1, beispielsweise in Wohnwagen, Wohnmobilen, Booten, Diesel-Kraftfahrzeugen etc., wobei ein Behälter 1 mehrere, vorzugsweise flexible, Aufnahmevolumina aufweist. Zusätzlich kann der Behälter 1 so ausgestaltet sein, dass eine einfache Entnahme der Vorrichtungen durch entsprechende Befestigungsmittel an den Öffnungen möglich ist. Außerdem kann der Behälter 1 eine Rinne 40, die insbesondere die Abführung eines Mediums begünstigt, aufweisen. Zusätzlich kann eine Vorrichtung beispielsweise innerhalb einer weiteren Vorrichtung angeordnet werden, sodass das befüllte Aufnahmevolumen robust gegen eventuelle Beschädigung ist und/oder besonders hohe Anforderungen in Bezug auf Sauberkeit und Hygiene erfüllt.

Vorzugsweise wird der Behälter im Rotationsformverfahren mittels eines Rotationswerkzeugs hergestellt. Eine bekannte Form der Herstellung sieht vor, dass eine abgewogene Menge Kunststoffmaterials in Form von Pulver, Pellets, Mikropellets oder dergleichen als Ausgangsmaterial in eine hohle Form gegeben wird, deren Innenoberfläche die Außenfläche des Kunststoffbehälters definiert. Die Form wird dann in Rotation um zwei in der Regel senkrecht zueinander angeordnete Achsen versetzt. Wärme wird in die Rotationsschmelzform eingetragen. Die Drehzahlen der Rotationsschmelzformen sind so niedrig, dass Fliehkräfte im Vergleich zur Schwerkraft einen geringen Einfluss besitzen. Das Kunststoffmaterial beginnt zu schmelzen und sich an der Innenseite der Rotationsschmelzform anzulegen, wodurch dem Kunststoffbehälter seine spätere Form gegeben wird. Für diese weit verbreitete Variante des Rotationsformverfahrens werden Thermoplaste wie Polyethylen (PE), Polypropylen, (PP), Polyamid 6 (PA6), Polyamid 11 oder 12 (PA11, PA12), Polycarbonat (PC) und dergleichen verwendet. Die Verarbeitungstemperaturen müssen oberhalb der Schmelz- oder Erweichungstemperatur des jeweiligen Kunststoffmaterials liegen.

Einige Kunststoffe, insbesondere Thermoplaste mit sehr hoher Schmelz- oder Erweichungstemperatur, bspw. PA6, oder auch Duroplaste, die einer thermoplastischen Verarbeitung naturgemäß nicht zugänglich sind, werden im Rotationsverfahren in an sich ebenfalls bekannter Weise bevorzugt so verarbeitet, dass als Ausgangsmaterial ein chemischer Vorläufer des für das Formteil vorgesehenen Materials, der sogenannte Kunststoffvorläufer, als Schmelze in flüssiger Form in die Rotationsschmelzform eingebracht wird und dort unter Rotation bei gleichzeitiger Formgebung bzw. Ausformung chemisch zum endgültigen Kunststoffwerkstoff reagiert, insbesondere polymerisiert. Dieses Verfahren kommt z.B. vorteilhaft zur Herstellung von Formteilen aus Polyamid 6 (PA6), Polyamid 12 (PA12) oder ihren Co-Polymeren zum Einsatz, wobei als Kunststoffvorläufer die entsprechenden Lactame, also z.B. Caprolactam und/oder Laurinlactam, eingesetzt werden, die bei Raumtemperatur unter Normalbedingungen in fester Form vorliegen, im Rotationsverfahren jedoch als Schmelze mit sehr niedriger Viskosität (Größenordnung 10 mPa·s, d.h. ungefähr wie Wasser) verarbeitet werden. Diese Verfahrensvariante gestattet die Herstellung von Kunststoffformteilen unter Umgehung der bei thermoplastischer Verarbeitung erforderlichen hohen Temperaturen, und die Prozesstemperatur wird bevorzugt unterhalb der Schmelztemperatur des fertigen Kunststoffs gehalten.

Das Rotationsformen mit Kunststoffen als Ausgangsmaterial wie auch mit Kunststoffvorläufern als Ausgangsmaterial ist allgemein bekannt und bspw. beschrieben in den Monographien
[1] Crawford, Roy J., Rotational Moulding of Plastics, Second Edition, Research Studies Press Ltd., Taunton / John Wiley & Sons Inc., New York, 1996,
[2] Nugent, Paul: Rotational Molding: A Practical Guide, 2001, sowie
[3] Crawford, Roy J., Throne, James L.: Rotational Molding Technology, Plastics Design Library, William Andrew Publishing, Norwich, New York, 2002.

In den so hergestellten Behälter 1 werden die erste und/oder zweite Vorrichtung 10, 20 eingesetzt.

Die Vorrichtungen 10, 20 können, insbesondere bei der Ausgestaltung als Beutel oder Schlauch, in einem separaten Werkzeug hergestellt werden, das ähnliche Maße hat wie das zur Herstellung des Behälters verwendete Werkzeug.

Alternativ besteht auch die Möglichkeit, zuerst den Behälter 1 herzustellen und anschließend den Beutel durch Rotationsformen direkt innerhalb des Behälters 1 auszubilden. Dazu wird das zur Herstellung des Beutels vorgesehene Ausgangsmaterial in die zuvor rotationsgeformte Behälterwandung 2 gegeben, welche dabei vorzugsweise in dem zu ihrer Herstellung verwendeten Werkzeug verbleibt. Das Werkzeug wird anschließend biaxial in Rotation versetzt, wobei es optional beheizt werden kann. Das Ausgangsmaterial legt sich an die Behälterwandung an und bildet die Wandung der Vorrichtung aus. Nach Abschluss des Rotationsformens wird vor oder nach der Entnahme des Behälters aus dem Werkzeug eine etwaige Anhaftung des Beutels an der Behälterwandung durch Druckerhöhung in dem Bereich zwischen der Behälterwandung und dem Beutel (d.h. in dem ersten Aufnahmeraum) und/oder durch Evakuieren des von dem Beutel eingeschlossenen Volumens (d.h. des zweiten Aufnahmeraums) erreicht. Damit lässt sich der Beutel maßgerecht in den Behälter einformen.

### Bezugszeichenliste

- 1: Behälter
- 2: Behälterwandung
- 3: erstes Aufnahmevolumen
- 4: erste Öffnung
- 5: Behälterflansch
- 6: Öffnungshals
- 7: Anlagefläche

- 10: erste Vorrichtung
- 11: zweites Aufnahmevolumen
- 12: zweite Öffnung

- 20: zweite Vorrichtung
- 21: drittes Aufnahmevolumen
- 22: dritte Öffnung

- 30: Überwurfmutter
- 31: Anschlussplatte
- 32: Vorrichtungsanschlussstutzen
- 33: Vorrichtungsanschlussflansch
- 34: Behälteranschlussstutzen
- 35: Gewindering
- 36: Schraube

- 40: Rinne
- 41: Rinnenöffnungen
- 42: Pumpe
- 43: Vertiefung

## Patentansprüche

1. Behälter (1) zur Aufnahme wenigstens eines Mediums, vorzugsweise eines Fluids, aufweisend:
eine Behälterwandung (2), die einen ersten Aufnahmeraum mit einem ersten Aufnahmevolumen (3) definiert, und
eine erste Vorrichtung (10), die innerhalb des ersten Aufnahmeraums angeordnet ist und ein zweites Aufnahmevolumen (11) definiert,
wobei der Behälter (1) wenigstens eine zweite Vorrichtung (20) aufweist, die wenigstens ein drittes Aufnahmevolumen (21) definiert,
wobei die wenigstens eine zweite Vorrichtung (20) innerhalb des ersten Aufnahmeraums angeordnet ist,
wobei die erste Vorrichtung (10) und die wenigstens eine zweite Vorrichtung (20) wenigstens teilweise flexibel ausgebildet sind, sodass die Größe des zweiten Aufnahmevolumens (11) und des wenigstens einen dritten Aufnahmevolumens (21) variabel sind, und
wobei der Behälter (1) wenigstens zwei Öffnungen (4, 12, 22) aufweist, die dazu eingerichtet sind, ein Medium dem ersten Aufnahmevolumen (3) und/oder dem zweiten Aufnahmevolumen (11) und/oder dem wenigstens einen dritten Aufnahmevolumen (21) zuzuführen und/oder von diesen abzuführen,
**dadurch gekennzeichnet, dass** die wenigstens eine zweite Vorrichtung (20) innerhalb des zweiten Aufnahmevolumens (11) angeordnet ist.

2. Behälter (1) nach Anspruch 1, **dadurch gekennzeichnet, dass** die wenigstens zwei Öffnungen (4, 22) dazu eingerichtet sind, ein Medium dem ersten Aufnahmevolumen (3) und/oder dem wenigstens einen dritten Aufnahmevolumen (21) zuzuführen und/oder von diesen abzuführen.

3. Behälter (1) nach Anspruch 1 oder 2, **dadurch gekennzeichnet, dass** der Behälter wenigstens eine Rinne (40) aufweist, wobei die Rinne (40) vorzugsweise in der Behälterwandung (2) angeordnet ist, wobei die wenigstens eine Rinne (40) das erste Aufnahmevolumen (3) mit einer ersten Öffnung (4) der wenigstens zwei Öffnungen (4, 12, 22) und/oder das zweite Aufnahmevolumen (11) mit einer zweiten Öffnung (12) der wenigstens zwei Öffnungen (4, 12, 22) verbindet, und wobei die zweite Öffnung (12) dazu eingerichtet ist, ein Medium dem zweiten Aufnahmevolumen (11) zuzuführen und/oder von diesem abzuführen.

4. Behälter (1) nach Anspruch 3, **dadurch gekennzeichnet, dass** der Behälter (1) wenigstens eine dritte Öffnung (22) aufweist, wobei die wenigstens eine Rinne (40) das dritte Aufnahmevolumen (21) mit der wenigstens einen dritten Öffnung (22) verbindet, wobei die wenigstens eine dritte Öffnung (22) dazu eingerichtet ist, ein Medium dem dritten Aufnahmevolumen (21) zuzuführen und/oder von diesem abzuführen.

5. Behälter (1) nach einem der Ansprüche 3 oder 4, **dadurch gekennzeichnet, dass** die Rinne (40) eine Ummantelung mit mehreren Rinnenöffnungen (41) aufweist, wobei die Rinnenöffnungen (41) dazu eingerichtet sind, die Rinne (40) mit den Aufnahmevolumina (3, 11, 21) zu verbinden, wobei die Rinnenöffnungen (41) vorzugsweise in die Rinne (40) gerichtete Vorsprünge aufweisen, und wobei die Vorsprünge vorzugsweise in Strömungsrichtung des Mediums geneigt sind.

6. Behälter (1) nach einem der vorhergehenden Ansprüche, **dadurch gekennzeichnet, dass** die erste Vorrichtung (10) und/oder die wenigstens eine zweite Vorrichtung (20) eine Trennwand, einen Beutel oder einen Schlauch umfassen.

7. Behälter (1) nach einem der vorhergehenden Ansprüche, **dadurch gekennzeichnet, dass** jedes Aufnahmevolumen (3, 11, 21) gegenüber den übrigen Aufnahmevolumina (3, 11, 21) hermetisch abgeschlossen ist.

8. Behälter (1) nach einem der vorhergehenden Ansprüche, **dadurch gekennzeichnet, dass** die erste Vorrichtung (10) und/oder die wenigstens eine zweite Vorrichtung (20) lösbar mit dem Behälter (1) verbunden sind, wobei die erste Vorrichtung (10) und/oder die wenigstens eine zweite Vorrichtung (20) unabhängig voneinander aus dem Behälter (1) entnommen werden können.

9. Behälter (1) nach einem der vorhergehenden Ansprüche, **dadurch gekennzeichnet, dass** die erste Vorrichtung (10) und/oder die wenigstens eine zweite Vorrichtung (20), insbesondere im Bereich einer Öffnung (4, 12, 22), mit der Behälterwandung (2) verschweißt und/oder verklemmt sind.

10. Behälter (1) nach einem der vorhergehenden Ansprüche, **dadurch gekennzeichnet, dass** die erste Vorrichtung (10) und/oder die wenigstens eine zweite Vorrichtung (20) zumindest teilweise aus einem flexiblen und insbesondere elastisch verformbaren Material bestehen.

11. Behälter (1) nach einem der vorhergehenden Ansprüche, **dadurch gekennzeichnet, dass** die erste Vorrichtung (10) und/oder die wenigstens eine zweite Vorrichtung (20) einen Faltenbalg aufweisen.

12. Behälter (1) nach einem der vorhergehenden Ansprüche, **dadurch gekennzeichnet, dass** die erste Vorrichtung (10) und/oder die wenigstens eine zweite Vorrichtung (20) ein Orientierungselement aufweisen, wobei das Orientierungselement die Positionierung und/oder die Ausdehnung der ersten Vorrichtung (10) und/oder der wenigstens einen zweiten Vorrichtung (20) vorbestimmt.

13. Verfahren zur Herstellung eines Behälters (1) nach einem der vorhergehenden Ansprüche, wobei das Verfahren die folgenden Schritte umfasst:
• Bereitstellung eines Behälters aus einem ersten Kunststoffmaterial und
• Rotationsformen einer ersten Vorrichtung (10) und/oder wenigstens einer zweiten Vorrichtung (20) aus einem zweiten Kunststoffmaterial unter Verwendung eines zweiten Kunststoffmaterials oder eines zweiten Kunststoffvorläufers, wobei die erste Vorrichtung (10) und/oder die wenigstens eine zweite Vorrichtung (20) in einer Behälterwandung (2) des bereitgestellten Behälters (1) geformt werden.

14. Verfahren zu Herstellung eines Behälters (1) nach Anspruch 13, **dadurch gekennzeichnet, dass** die Behälterwandung (2) in einem Werkzeug unter Verwendung eines ersten Kunststoffmaterials oder eines ersten Kunststoffvorläufers gefertigt wird.

15. Verfahren zu Herstellung eines Behälters (1) nach Anspruch 13 oder 14, **dadurch gekennzeichnet, dass** die Behälterwandung (2) durch Rotationsformen, Blasformen, Spritzgießen oder Tiefziehen gefertigt wird.

## Claims

1. Container (1) for holding at least one medium, preferably a fluid, comprising:
a container wall (2) defining a first receiving space with a first receiving volume (3), and
a first device (10) which is arranged within the first receiving space and defines a second receiving volume (11),
wherein the container (1) comprises at least one second device (20) which defines at least one third receiving volume (21),
wherein the at least one second device (20) is arranged within the first receiving space,
wherein the first device (10) and the at least one second device (20) are at least partially flexible so that the size of the second receiving volume (11) and of the at least one third receiving volume (21) are variable, and
wherein the container (1) has at least two openings (4, 12, 22) which are designed to supply a medium to the first receiving volume (3) and/or the second receiving volume (11) and/or the at least one third receiving volume (21) and/or to remove it therefrom,
**characterized in that** the at least one second device (20) is arranged within the second receiving volume (11).

2. Container (1) according to claim 1, **characterized in that** the at least two openings (4, 22) are designed to feed a medium to the first receiving volume (3) and/or the at least one third receiving volume (21) and/or to discharge it from these.

3. Container (1) according to claim 1 or 2, **characterized in that** the container has at least one channel (40), the channel (40) being preferably arranged in the container wall (2), the at least one channel (40) connecting the first receiving volume (3) with a first opening (4) of the at least two openings (4, 12, 22) and/or the second receiving volume (11) with a second opening (12) of the at least two openings (4, 12, 22), and wherein the second opening (12) is designed to supply a medium to the second receiving volume (11) and/or to discharge it therefrom.

4. Container (1) according to claim 3, **characterized in that** the container (1) has at least one third opening (22), wherein the at least one channel (40) connects the third receiving volume (21) to the at least one third opening (22), wherein the at least one third opening (22) is designed to supply a medium to the third receiving volume (21) and/or to discharge a medium from it.

5. Container (1) according to one of claims 3 or 4, **characterized in that** the channel (40) has a casing with several channel openings (41), wherein the channel openings (41) are designed to connect the channel (40) to the receiving volumes (3, 11, 21), wherein the channel openings (41) preferably have projections directed into the channel (40), and wherein the projections are preferably inclined in the direction of flow of the medium.

6. Container (1) according to one of the preceding claims, **characterized in that** the first device (10) and/or the at least one second device (20) comprise a partition, a bag, or a tube.

7. Container (1) according to one of the preceding claims, **characterized in that** each receiving volume (3, 11, 21) is hermetically sealed off from the other receiving volumes (3, 11, 21).

8. Container (1) according to one of the preceding claims, **characterized in that** the first device (10) and/or the at least one second device (20) are detachably connected to the container (1), wherein the first device (10) and/or the at least one second device (20) can be removed from the container (1) independently of one another.

9. Container (1) according to one of the preceding claims, **characterized in that** the first device (10) and/or the at least one second device (20) are welded and/or clamped to the container wall (2), in particular in the region of an opening (4, 12, 22).

10. Container (1) according to one of the preceding claims, **characterized in that** the first device (10) and/or the at least one second device (20) consist at least partially of a flexible and, in particular, elastically deformable material.

11. Container (1) according to one of the preceding claims, **characterized in that** the first device (10) and/or the at least one second device (20) have a bellows.

12. Container (1) according to one of the preceding claims, **characterized in that** the first device (10) and/or the at least one second device (20) have an orientation element, wherein the orientation element predetermines the positioning and/or the extension of the first device (10) and/or the at least one second device (20).

13. Method for manufacturing a container (1) according to one of the preceding claims, wherein the method comprises the following steps:
providing a container made of a first plastic material and
rotationally molding a first device (10) and/or at least one second device (20) from a second plastic material using a second plastic material or a second plastic precursor, wherein the first device (10) and/or the at least one second device (20) are molded in a container wall (2) of the provided container (1).

14. Method for manufacturing a container (1) according to claim 13, **characterized in that** the container wall (2) is manufactured in a mold using a first plastic material or a first plastic precursor.

15. Method for manufacturing a container (1) according to claim 13 or 14, **characterized in that** the container wall (2) is manufactured by rotational molding, blow molding, injection molding, or deep drawing.

## Revendications

1. Récipient (1) destiné à recevoir au moins un milieu, de préférence un fluide, comprenant :
une paroi de vaisseau (2) définissant un premier espace de réception présentant un premier volume de réception (3), et
un premier dispositif (10) qui est disposé à l'intérieur du premier espace de réception et définit un second volume de réception (11),
le récipient (1) présentant au moins un second dispositif (20) définissant au moins un troisième volume de réception (21),
l'au moins un second dispositif (20) étant disposé dans le premier espace de réception,
le premier dispositif (10) et l'au moins un second dispositif (20) étant au moins partiellement flexibles, de sorte que les tailles du deuxième volume de réception (11) et de l'au moins un troisième volume de réception (21) sont variables
le récipient (1) présentant au moins deux ouvertures (4, 12, 22) qui sont conçues pour apporter un milieu au premier volume de réception (3) et/ou au deuxième volume de réception (11) et/ou au troisième volume de réception (21) et/ou pour l'en évacuer,
**caractérisé en ce que** ledit au moins un second dispositif (20) est disposé à l'intérieur du deuxième volume de réception (11).

2. Récipient (1) selon la revendication 1, **caractérisé en ce que** les au moins deux ouvertures (4, 22) sont conçues pour apporter un fluide au premier volume de réception (3) et/ou à l'au moins un troisième volume de réception (21) et/ou pour l'en évacuer.

3. Récipient (1) selon la revendication 1 ou 2, **caractérisé en ce que** le récipient présente au moins un canal (40), le canal (40) étant de préférence disposé dans la paroi (2) du récipient, l'au moins un canal (40) reliant le premier volume de réception (3) à une première ouverture (4) des au moins deux ouvertures (4, 12, 22) et/ou le deuxième volume de réception (11) à une deuxième ouverture (12) des au moins deux ouvertures (4, 12, 22), et la deuxième ouverture (12) étant conçue pour apporter un milieu dans le deuxième volume de réception (11) et/ou pour l'en évacuer.

4. Récipient (1) selon la revendication 3, **caractérisé en ce que** le récipient (1) présente au moins une troisième ouverture (22), l'au moins un canal (40) reliant le troisième volume de réception (21) à l'au moins une troisième ouverture (22), l'au moins une troisième ouverture (22) étant conçue pour apporter un milieu dans le troisième volume de réception (21) et/ou pour l'en évacuer.

5. Récipient (1) selon l'une quelconque des revendications 3 ou 4, **caractérisé en ce que** le canal (40) présente une enveloppe dotée de plusieurs ouvertures de canal (41), les ouvertures de canal (41) étant conçues pour relier le canal (40) aux volumes de réception (3, 11, 21), les ouvertures de canal (41) présentant de préférence des saillies dirigées vers l'intérieur du canal (40), et lesdites saillies étant de préférence inclinées dans le sens d'écoulement du milieu.

6. Récipient (1) selon l'une quelconque des revendications précédentes, **caractérisé en ce que** le premier dispositif (10) et/ou l'au moins un second dispositif (20) comprennent une paroi de séparation, un sac ou un tuyau.

7. Récipient (1) selon l'une quelconque des revendications précédentes, **caractérisé en ce que** chaque volume de réception (3, 11, 21) est fermé hermétiquement par rapport aux autres volumes de réception (3, 11, 21).

8. Récipient (1) selon l'une quelconque des revendications précédentes, **caractérisé en ce que** le premier dispositif (10) et/ou l'au moins un second dispositif (20), sont reliés de manière dissociable au récipient (1), le premier dispositif (10) et/ou l'au moins un second dispositif (20) pouvant être retirés du récipient (1) indépendamment l'un de l'autre.

9. Récipient (1) selon l'une quelconque des revendications précédentes, **caractérisé en ce que** le premier dispositif (10) et/ou l'au moins un second dispositif (20), en particulier au niveau d'une ouverture (4, 12, 22), sont soudés et/ou bloqués sur la paroi (2) du récipient.

10. Récipient (1) selon l'une quelconque des revendications précédentes, **caractérisé en ce que** le premier dispositif (10) et/ou l'au moins un second dispositif (20) sont constitués au moins partiellement d'un matériau flexible et en particulier élastiquement déformable.

11. Récipient (1) selon l'une quelconque des revendications précédentes, **caractérisé en ce que** le premier dispositif (10) et/ou l'au moins un second dispositif (20) présentent un soufflet.

12. Récipient (1) selon l'une quelconque des revendications précédentes, **caractérisé en ce que** le premier dispositif (10) et/ou l'au moins un second dispositif (20) présentent un élément d'orientation, l'élément d'orientation prédéterminant le positionnement et/ou l'expansion du premier dispositif (10) et/ou de l'au moins un second dispositif (20).

13. Procédé de fabrication d'un récipient (1) selon l'une quelconque des revendications précédentes, le procédé comprenant les étapes suivantes :
• la mise à disposition d'un récipient fait d'une première matière plastique et
• de moules rotatifs d'un premier dispositif (10) et/ou d'au moins un second dispositif (20) faits d'une seconde matière plastique en utilisant une seconde matière plastique ou un second précurseur de matière plastique, le premier dispositif (10) et/ou l'au moins un second dispositif (20) étant moulés dans une paroi de récipient (2) du récipient (1) prévu.

14. Procédé de fabrication d'un récipient (1) selon la revendication 13, **caractérisé en ce que** la paroi de récipient (2) est fabriquée dans un outil en utilisant une première matière plastique ou un premier précurseur de matière plastique.

15. Procédé de fabrication d'un récipient (1) selon la revendication 13 ou 14, **caractérisé en ce que** la paroi de récipient (2) est fabriquée par moulage par rotation, moulage par soufflage, moulage par injection ou emboutissage.
